# EUROPEAN PATENT APPLICATION

(11) **EP 4 761 259 A1**
(43) Date of publication of application: **17.06.2026**
(21) Application number: 24851594.2
(22) Date of filing: 23.07.2024
(51) Int. Cl.: H04N 23/63, G03B 17/18

(54) **IMAGING DEVICE, IMAGING METHOD, AND PROGRAM**

(30) Priority: 08.08.2023 JP 2023129014
(71) Applicant: Sony Group Corporation, Tokyo 108-0075 (JP)
(72) Inventor: UYAMA Keisuke, Tokyo 108-0075 (JP)
(74) Representative: MFG Patentanwälte Meyer-Wildhagen Meggle-Freund Gerhard PartG mbB
(86) International application number: PCT/JP2024/026292
(87) International publication number: WO 2025/033166

(57) **Abstract**

The present disclosure relates to an imaging device, an imaging method, and a program that enable imaging with an appropriate depth of field.

The imaging device includes: a camera information acquisition unit configured to acquire camera information of a first imaging unit when an image of a subject to be 3D-modeled is captured; a depth-of-field calculation unit configured to calculate a depth of field using the camera information; and a display control unit configured to generate a display image in which a depth-of-field region visualizing the depth of field is superimposed on a captured image obtained by capturing the image of the subject. The technology of the present disclosure can be applied to, for example, an imaging device that performs 3D modeling.

## Description

### TECHNICAL FIELD

The present disclosure relates to an imaging device, an imaging method, and a program, and more particularly, to an imaging device, an imaging method, and a program that enable imaging with an appropriate depth of field.

### BACKGROUND ART

As a method for 3D modeling of a 3D object having a three-dimensional shape, there is a method called photogrammetry in which a plurality of images of the 3D object is captured from multiple directions and data (3D data) of a 3D model of the 3D object is generated on the basis of the plurality of captured images.

Furthermore, there is another method called real-time 3D modeling in which 3D data is generated instantaneously (in real time) on the basis of information such as captured images, pose information, and depth. Moreover, in recent years, there is also proposed a method collectively called neural rendering (e.g., neural radiance fields (NeRF) and the like) in which neural fields are constructed on the basis of captured images and poses associated with the captured images to generate an image or 3D model from a desired viewpoint.

In 3D model imaging, increasing the depth of field is important for creating higher-quality 3D models because establishing correspondences between images from multiple viewpoints in multi-view geometry becomes easier. In particular, interchangeable-lens cameras tend to exhibit a shallow depth of field due to their large image sensors, and the depth of field is typically increased by stopping down the aperture. However, simply stopping down the aperture too much increases the depth of field but reduces the amount of light captured; increasing sensitivity to compensate may lead to image quality degradation due to noise. Since the depth of field constantly varies in a manner that depends on the focus distance or aperture size, it is difficult for users to perceive.

Patent Document 1 discloses an imaging device that obtains front and rear depths of field to generate a focus frame, and displays the focus frame.

### CITATION LIST

### PATENT DOCUMENT

Patent Document 1: Japanese Patent Application Laid-Open No. 2013-242378

### SUMMARY OF THE INVENTION

### PROBLEMS TO BE SOLVED BY THE INVENTION

In imaging for 3D model generation, it is necessary to recognize both the subject and the depth of field stereoscopically, but the technology disclosed in Patent Document 1 does not take into account imaging for 3D model generation. Since it is difficult to change the depth of field after imaging, it is necessary to set the depth of field appropriately during imaging.

The present disclosure has been made in view of such circumstances, and it is therefore an object of the present disclosure to enable imaging with an appropriate depth of field.

### SOLUTIONS TO PROBLEMS

An imaging device according to one aspect of the present disclosure includes:
an acquisition unit configured to acquire camera information of a first imaging unit when an image of a subject to be 3D-modeled is captured;
a calculation unit configured to calculate a depth of field using the camera information; and
a display control unit configured to generate a display image in which a depth-of-field region visualizing the depth of field is superimposed on a captured image obtained by capturing the image of the subject.

An imaging method according to one aspect of the present disclosure includes causing an imaging device to perform:
acquiring camera information of a first imaging unit when an image of a subject is captured;
calculating a depth of field using the camera information; and
generating a display image in which a depth-of-field region visualizing the depth of field is superimposed on a captured image obtained by capturing the image of the subject to be 3D-modeled.

A program according to one aspect of the present disclosure causes
a computer to perform processing, the processing including:
acquiring camera information of a first imaging unit when an image of a subject is captured;
calculating a depth of field using the camera information; and
generating a display image in which a depth-of-field region visualizing the depth of field is superimposed on a captured image obtained by capturing the image of the subject to be 3D-modeled.

In one aspect of the present disclosure, camera information of a first imaging unit when an image of a subject is captured is acquired, a depth of field is calculated using the camera information, and a display image is generated in which a depth-of-field region visualizing the depth of field is superimposed on a captured image obtained by capturing the image of the subject to be 3D-modeled.

Note that the program executed by the computer can be provided by being transmitted via a transmission medium or by being recorded on a recording medium.

The imaging device may be an independent device or an internal block constituting one device.

### BRIEF DESCRIPTION OF DRAWINGS

Fig. 1 is a diagram for describing an overview of photogrammetry.
Fig. 2 is a diagram for describing an overview of real-time 3D modeling.
Fig. 3 is a diagram of describing differences between photogrammetry and real-time 3D modeling.
Fig. 4 is a perspective view illustrating an example of an external appearance of an imaging device according to an embodiment of the present disclosure.
Fig. 5 is a perspective view illustrating the example of the external appearance of the imaging device according to the embodiment of the present disclosure.
Fig. 6 is a diagram for describing a depth-of-field presentation screen presented by the imaging device.
Fig. 7 is a diagram for describing the depth-of-field presentation screen presented by the imaging device.
Fig. 8 is a diagram for describing the depth-of-field presentation screen presented by the imaging device.
Fig. 9 is a diagram for describing the depth-of-field presentation screen presented by the imaging device.
Fig. 10 is a diagram for describing the depth-of-field presentation screen presented by the imaging device.
Fig. 11 is a diagram for describing the depth-of-field presentation screen presented by the imaging device.
Fig. 12 is a diagram for describing effects of the depth-of-field presentation by the imaging device.
Fig. 13 is a diagram for describing the effects of the depth-of-field presentation by the imaging device.
Fig. 14 is a block diagram illustrating a configuration example of the imaging device.
Fig. 15 is a block diagram illustrating a configuration example of a server device.
Fig. 16 is a block diagram illustrating a configuration example of an information processing device that can be configured as the imaging device or the server device.
Fig. 17 is a flowchart for describing depth-of-field display control processing.
Fig. 18 is a flowchart for describing imaging control processing.
Fig. 19 is a diagram for describing a guide display indicating a result of depth-of-field determination.
Fig. 20 is a diagram for describing the guide display indicating the result of depth-of-field determination.
Fig. 21 is a diagram illustrating a screen example of a manual auto focus (AF) operation screen.
Fig. 22 is a diagram illustrating an example of a monitor image in a depth composition mode.

### MODE FOR CARRYING OUT THE INVENTION

Hereinafter, modes for carrying out the technology of the present disclosure (hereinafter, referred to as embodiments) will be described with reference to the accompanying drawings. The description is given in the following order.
1. 3D Modeling
2. Example of External Appearance of Imaging Device
3. Example of Depth-of-Field Presentation Screen
4. Configuration Example of Imaging Device
5. Processing Flow of Depth-of-Field Display Control Processing
6. Processing Flow of Imaging Control Processing
7. Guide Display Indicating Result of Depth-of-Field Determination.
8. Manual AF Operation Screen
9. Depth Composition Mode
10. Depth-of-Field Information Output
11. Conclusion

Note that, in the present disclosure, "image acquisition processing" refers to capturing images using an imaging device including an image sensor (imaging element) in order to acquire image data to be temporarily or permanently recorded on a recording medium. The recording medium on which the image data is recorded may be inside or outside the imaging device. For example, the image data may not only be immediately recorded on the recording medium in the imaging device, but may also be transmitted to another device or transmitted over a network (e.g., uploaded) and recorded on the recording medium in an external device. The term "image acquisition processing" is used to be distinguished from imaging only for displaying a subject image on a monitor.

Furthermore, the term "image" includes both still images and moving images. The term "captured image" refers to a moving image or still image captured by the image sensor, or the images thereof. That is, the captured image includes an image to be recorded on the recording medium and an image to be displayed on the monitor as a through image or the like. The captured image may be data itself (so-called RAW data) obtained by the image sensor or the like. Alternatively, the captured image may be an image subjected to color separation processing or color conversion processing. Furthermore, the captured image may be an image subjected to signal processing such as defect correction, noise reduction, automatic white balance (AWB), or gamma correction. Moreover, the captured image may be an image subjected to another type of image processing.

### <1. 3D Modeling>

First, photogrammetry will be described.

As a method for generating (reconstructing) a model corresponding to a three-dimensional shape of an object (also referred to as a 3D object), there is a method called photogrammetry in which images of the 3D object are captured from multiple directions and (3D data of) a 3D model is generated on the basis of the plurality of captured images. Note that, in the present disclosure, generation of a model corresponding to a three-dimensional shape of a 3D object is also referred to as 3D modeling.

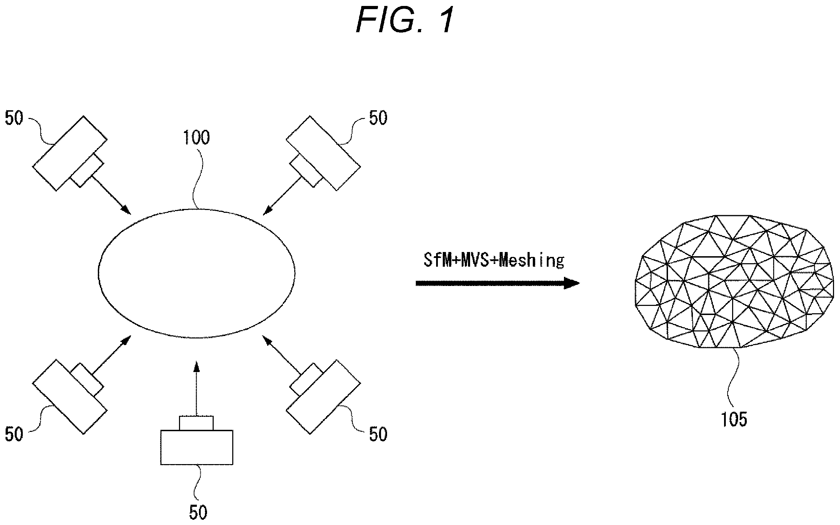

Photogrammetry is a method for reconstructing a highly accurate three-dimensional model from a plurality of images captured from various viewpoints using the principle of triangulation. For example, a plurality of images of a 3D object 100 captured from a plurality of viewpoints is obtained through an imaging operation using a camera 50 illustrated in Fig. 1. Processing called structure from motion (SfM) and processing called multi view stereo (MVS) are then performed using these captured images and the like, and meshing and texturing are further performed as post-processing to generate a 3D model 105.

Note that the term "accuracy" of a 3D model herein may include not only reproducibility of a three-dimensional shape of a target 3D object, that is, fidelity, level of detail, and the like of the three-dimensional shape, but also reproducibility (fidelity, level of detail, and the like) of textures applied to the surface of the 3D model.

In SfM, for example, corresponding points are searched for between captured images, the position and orientation of each camera are derived using epipolar constraints, and the position of each corresponding point in three-dimensional space is determined through triangulation based on the positions and orientations of the cameras. In the present disclosure, each point in three-dimensional space may also be referred to as a three-dimensional point. That is, the three-dimensional point corresponding to each corresponding point is determined by SfM. Then, the entire three-dimensional point cloud determined as described above is optimized through bundle adjustment.

In MVS, for example, denser corresponding points are searched for using the three-dimensional point cloud derived as described above, and the resultant three-dimensional points are added.

As described above, in photogrammetry, global optimization calculation called bundle adjustment, which minimizes errors, is performed, resulting in a highly accurate result but involving a high computational load. Furthermore, since photogrammetry is based on geometric calculation rather than physical measurement, higher-resolution images can yield more accurate reconstructed models in principle.

Next, real-time 3D modeling will be described.

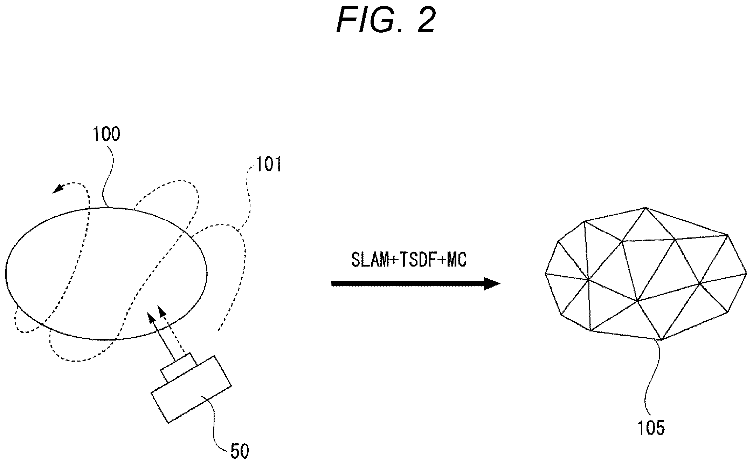

As a 3D modeling method different from the photogrammetry, there is a method called real-time 3D modeling in which 3D data is generated instantaneously (in real-time) on the basis of information such as captured images, pose information, and depth. In this method, for example, as illustrated in Fig. 2, images of the 3D object 100 are captured while moving the camera 50 around the 3D object 100 as indicated by a dotted line 101. The camera 50 includes not only an image sensor but also a light detection and ranging (lidar) scanner (time of flight (ToF) module), and obtains a captured image while detecting depth (distance to a subject).

With the recent miniaturization and functional enhancement of ToF modules, relatively long depths (e.g., about 5 m) can be accurately measured both indoors and outdoors. As a result, real-time modeling and capturing experiences can be easily enjoyed at the consumer level.

The camera 50 further includes an inertial sensor, and detects inertial information such as acceleration and angular velocity of the camera 50.

In real-time 3D modeling, three-dimensional pose estimation processing called simultaneous localization and mapping (SLAM) is performed to generate pose information indicating the position and orientation of the camera 50. Furthermore, a truncated signed distance function (TSDF) is updated using the pose information and the depth, and the 3D model 105 (mesh and texture) is generated through processing called marching cubes (MC).

In SLAM, for example, the position and orientation of the camera 50 are estimated on the basis of the captured images and inertial information (self-localization). In the update of the TSDF, depths are mapped to voxels, resulting in the detection of a volume. In MC, isosurfaces are calculated using adjacent voxels. With SLAM-based real-time pose information, it is possible to detect the voxel volume without using a point cloud by integrating depths (how far light reaches) across a plurality of frames. Voxel representation allows estimation of an occluded viewpoint (missing viewpoint) that needs to be captured. As a result, a perforated or protruding structure in a 3D object can be detected.

Furthermore, as another 3D modeling method, there is also a method collectively referred to as neural rendering. This is a method in which neural fields are constructed on the basis of captured images and poses associated with the captured images to generate an image or 3D model from a desired viewpoint, and, for example, neural radiance fields (NeRF) and the like have been proposed.

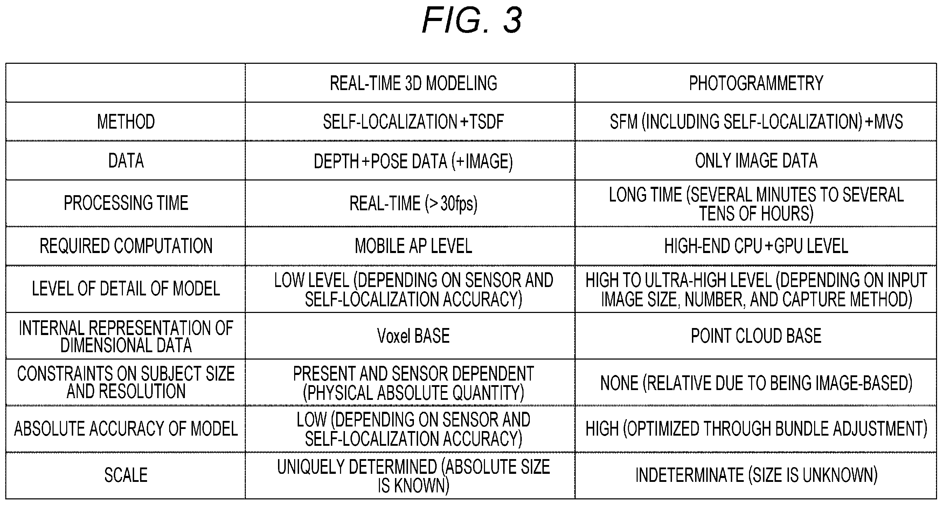

Each of these 3D modeling methods has different characteristics, and no single method excels in all respects. Fig. 3 illustrates a comparison of the characteristics of photogrammetry and real-time 3D modeling. As can be seen from the comparison of the methods illustrated in Fig. 3, photogrammetry uses SfM (including self-localization) and MVS, whereas real-time 3D modeling uses self-localization (SLAM) and TSDF. Furthermore, as can be seen from the comparison of data to be used, photogrammetry uses only image data, whereas real-time 3D modeling uses depth and pose data in addition to image data. Furthermore, as can be seen from the comparison of processing time, photogrammetry requires a long processing time ranging from several minutes to several tens of hours, whereas real-time 3D modeling allows near-instantaneous processing at rates such as 30 frames per second (fps).

Furthermore, as can be seen from the comparison of required computational power, photogrammetry requires computational power at a high-end central processing unit (CPU) and graphics processing unit (GPU) level, whereas real-time 3D modeling requires computational power at a mobile application processor (AP) level. Furthermore, as can be seen from the comparison of levels of detail of models to be generated, photogrammetry achieves a relatively high level of detail, depending on factors such as the resolution, number, and capturing method of captured images, whereas real-time 3D modeling results in a relatively low level of detail, depending on factors such as the depth and the accuracy of self-localization.

Furthermore, with respect to internal representation of three-dimensional data to be generated, photogrammetry is point cloud-based, whereas real-time 3D modeling is voxel-based. Furthermore, photogrammetry imposes no constraints on the subject size and resolution, whereas real-time 3D modeling is limited by the sensor. Furthermore, as can be seen from the comparison of absolute accuracy of models, photogrammetry achieves relatively high absolute accuracy due to the optimization through bundle adjustment, whereas real-time 3D modeling results in relatively low absolute accuracy, depending on the sensor and the accuracy of self-localization. Furthermore, as can be seen from the comparison of scales, the scale is indeterminate (size is unknown) for photogrammetry, whereas the scale is uniquely determined (absolute size is known) for real-time 3D modeling.

There are such differences in characteristics between photogrammetry and real-time 3D modeling, for example. That is, it is possible to reduce the workload and computational cost of 3D modeling in a case where real-time 3D modeling is applied compared to a case where photogrammetry or neural rendering is applied. It is, however, possible to generate a more accurate 3D model in a case where photogrammetry or neural rendering is applied than in a case where real-time 3D modeling is applied.

Therefore, in order to obtain more accurate 3D data, photogrammetry or neural rendering may be applied. However, in this case as well, it is desirable that the workload and computational cost of 3D modeling be as low as possible. In order to reduce the workload and computational cost of 3D modeling, it is required that a 3D model with the highest possible accuracy be generated while minimizing the number of image captures.

For example, in a case where captured images necessary for 3D modeling cannot be obtained, there is a possibility that the accuracy of a generated 3D model decreases. Conversely, if an excessive number of images are captured to avoid a shortage, the number of image captures increases unnecessarily, and the user's workload increases accordingly. Furthermore, since 3D modeling is performed using unnecessary captured images in this case, the computational cost increases unnecessarily.

That is, in order to obtain more accurate 3D data with less workload and computational cost, it is required that the images of a 3D object be captured from more appropriate positions and orientations. However, in each of the 3D modeling methods described above, it is difficult for an imaging operator to identify appropriate positions and orientations for imaging.

For example, photogrammetry requires a significant amount of time for 3D modeling processing, which makes it difficult for the imaging operator to immediately review a 3D modeling result during imaging. It is therefore difficult for the imaging operator to identify, during imaging, appropriate positions and orientations for the imaging. As a result, for example, there is a possibility of a shortage of images captured from appropriate positions and orientations, resulting in a decrease in the accuracy of 3D data obtained through photogrammetry. Furthermore, in a case where an excessive number of images is captured haphazardly from various positions and orientations in order to avoid a shortage of images captured from appropriate positions and orientations, there is a possibility that not only the user's workload increases, but also the number of captured images increases unnecessarily, and the load (computational cost, processing time, and the like) of 3D modeling processing increases unnecessarily.

Therefore, the imaging device according to the present embodiment performs 3D modeling twice, and imaging for the second 3D modeling is guided and controlled using a result of the first 3D modeling.

Specifically, the imaging device performs the first 3D modeling as real-time 3D modeling to generate a first 3D model representing a three-dimensional shape of a 3D object. Guiding the user who is the imaging operator and imaging control for the second 3D modeling, that is, for example, photogrammetry or neural rendering, are performed using information based on the real-time 3D modeling. That is, the imaging device provides a guide, using the information based on the first 3D modeling (real-time 3D modeling), to allow imaging for the second 3D modeling processing to be performed from more appropriate positions and orientations. Moreover, the present embodiment eliminates the need for the user to perform a shutter operation and allows shutter control, that is, image acquisition processing, to be automatically performed at an optimal timing. The imaging for the first 3D modeling and the imaging (image acquisition processing) for the second 3D modeling may be performed simultaneously, or the imaging for the second 3D modeling (image acquisition processing) may be performed after the imaging for the first 3D modeling.

### <2. Example of External Appearance of Imaging Device>

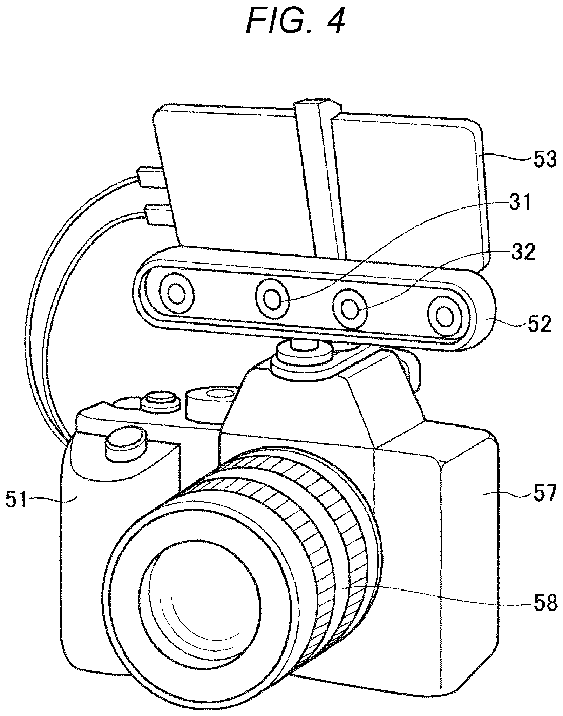

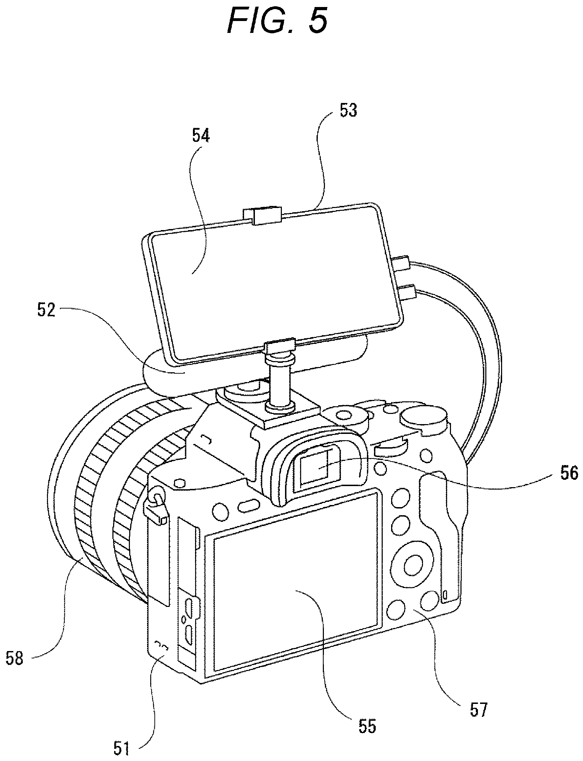

Figs. 4 and 5 are perspective views illustrating an example of an external appearance of the imaging device according to the embodiment of the present disclosure.

An imaging device 51 illustrated in Figs. 4 and 5 is a camera including a main body 57 and a lens barrel 58 attached to the main body 57. The lens barrel 58 may be of an interchangeable lens type or may be of a non-removable type integrally provided with the main body 57.

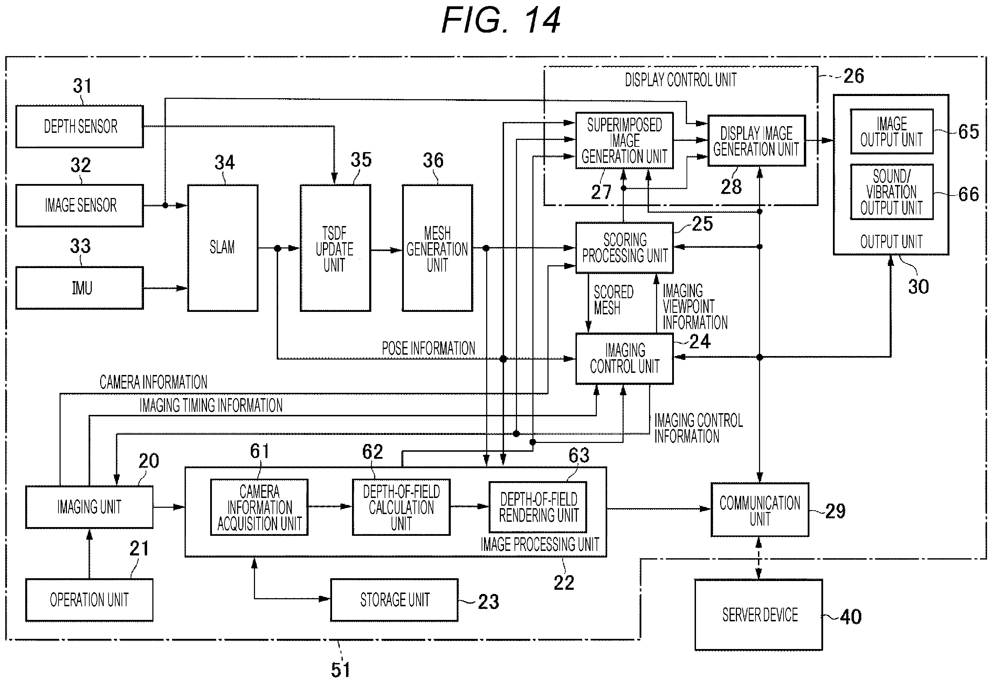

Light incident through the lens barrel 58 is captured, that is, photoelectrically converted, by an image sensor provided in the main body 57 and processed as a captured image. The image sensor here corresponds to an imaging unit 20 (in Fig. 14) to be described later.

The main body 57 and the lens barrel 58 are equipped with various operation elements for the user to operate, a display 55 that displays captured images, various icons, menus, and the like, a viewfinder 56, and the like.

A sensor unit 52 is attached to the main body 57. The sensor unit 52 is a unit equipped with, for example, a depth sensor 31 constituting a ranging unit, an image sensor 32 constituting an imaging unit, an inertial measurement unit (IMU) 33 constituting inertial information detecting unit (in Fig. 14), and the like. With the sensor unit 52, a captured image is obtained by the image sensor 32, distance information regarding the distance to a subject is obtained by the depth sensor 31, and inertial information (acceleration and angular velocity) of the imaging device 51 is obtained by the IMU 33.

Furthermore, an interface device 53 is attached to the main body 57. The interface device 53 may be a device exclusively for the imaging device 51, or may be an information processing device such as a smartphone capable of cooperating with the imaging device 51. A display 54 of the interface device 53 presents various types of information to the user. For example, a captured image (through image) of a subject is displayed on the display 54. In addition, the display 54 also presents an imaging operation guide to the user. Furthermore, the display 54 is configured as a touch panel and also functions as an operation input unit that accepts user's operation input.

Note that Figs. 4 and 5 illustrate an example in which a smartphone or the like is used as the interface device 53; however, display and operation input detection via the interface device 53 may be performed by the display 55 of the main body 57, eliminating the need for the separate interface device 53.

Furthermore, another example may also be considered in which a camera including the main body 57 and the lens barrel 58 as illustrated in the drawing is not used. For example, since an information processing device such as a smartphone often has an imaging function and also often has a ranging function and an inertial sensor function, a smartphone, a tablet device, or the like may be used alone as the imaging device 51 in the present embodiment.

Furthermore, the depth sensor 31, the image sensor 32, the IMU33, and the like provided in the sensor unit 52 may be built in the main body 57 or in the interface device 53. Furthermore, in a case where the information processing device such as a smartphone serves as the imaging device 51, the depth sensor 31, the image sensor 32, and the IMU 33 may be built in the information processing device.

Furthermore, a display device for displaying images and the like may be an external device. For example, display data may be transmitted from the imaging device 51 via short-range wireless communication, wired communication, or the like, and displayed on a monitor display device, a head-mounted display, a display of another information processing device, or the like.

That is, the imaging device 51 according to the embodiment is a device capable of capturing images in any form, and only needs to have a control function of executing an interface based on image display or the like on an integrated or separate screen or the like.

### <3. Example of Depth-of-Field Presentation Screen>

The user uses the imaging device 51 to capture an image of a subject to be 3D-modeled, and the imaging device 51 displays the captured image (through image) of the subject and a guide for the user who is an imaging operator on the display 54 of the interface device 53 during the imaging for the first 3D modeling. In the present embodiment, the imaging device 51 displays, as a guide for the user, depth of field superimposed on the captured image of the subject on the display 54.

In 3D model imaging, increasing the depth of field is important for creating higher-quality 3D models because establishing correspondences between images from multiple viewpoints in multi-view geometry becomes easier. In particular, interchangeable-lens cameras tend to have a shallow depth of field because they use large image sensors and increase the depth of field by stopping down their apertures. However, simply stopping down the aperture too much increases the depth of field but reduces the amount of light captured; increasing sensitivity to compensate may lead to image quality degradation due to noise. Since the depth of field constantly varies in a manner that depends on the focus distance or aperture size, it is difficult for users to perceive. The imaging device 51 has a function of displaying, as a guide for the user, the depth of field superimposed on the captured image of the subject. Visualizing the depth of field allows the user to capture images while easily checking which region of the subject to be 3D-modeled is in focus, thereby allowing the user to create a high-quality 3D model.

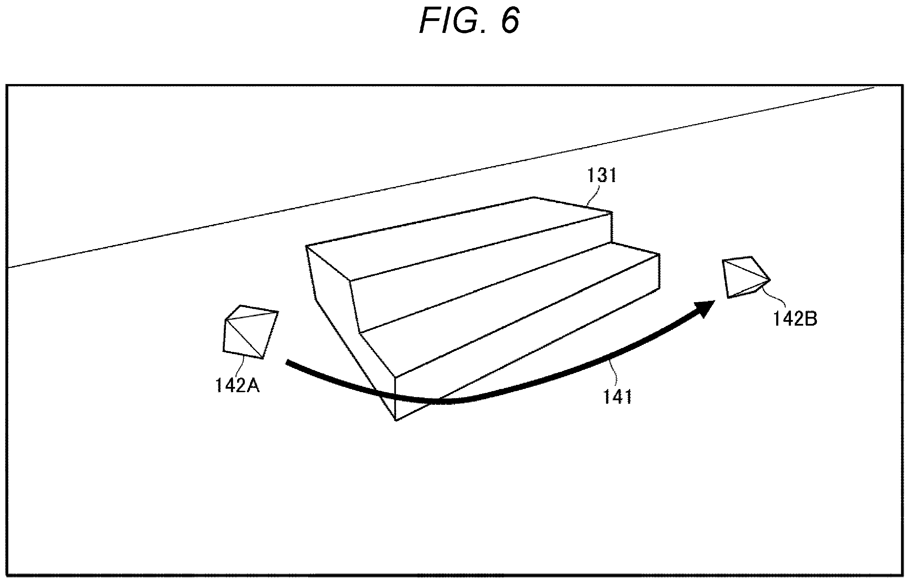

A presentation screen (user interface screen) of the imaging device 51 for presenting the depth of field will be described with reference to Figs. 6 to 13.

For example, as illustrated in Fig. 6, the user captures, using the imaging device 51, an image of a stepped object 131 as a subject to be 3D-modeled. While checking the monitor image displayed on the display 54, the user moves around the object 131 that is the subject as indicated by an arrow 141 to capture the images of the object 131. Frustums 142A and 142B each indicate a position of the imaging device 51 that captures the images of the subject (hereinafter, referred to as a camera position). Here, the camera position includes both the position and orientation (imaging direction) of the imaging device 51 in three-dimensional space.

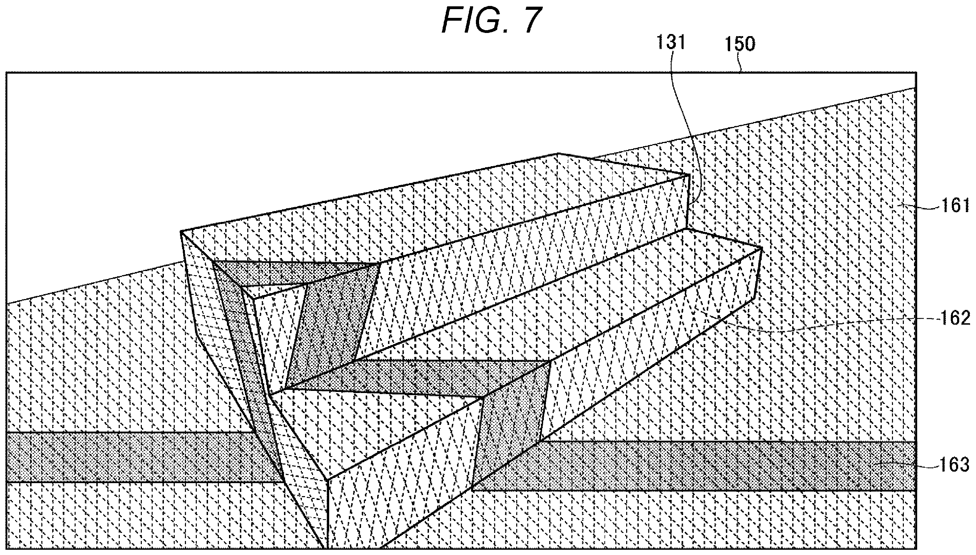

Fig. 7 illustrates an example of a monitor image displayed on the display 54 of the interface device 53 at the camera position of the frustum 142A illustrated in Fig. 6 during the imaging for the first 3D modeling.

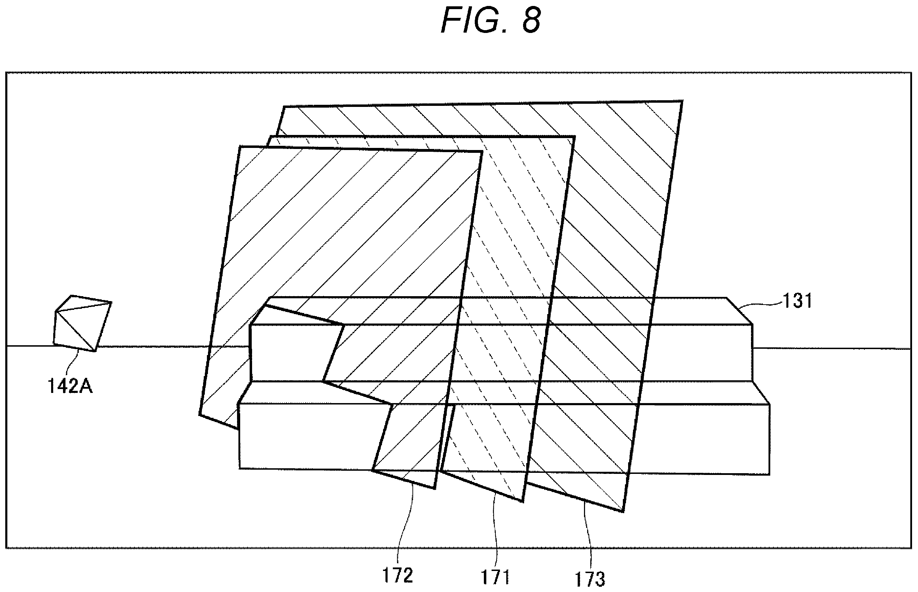

In a monitor image 150 illustrated in Fig. 7, a three-dimensional mesh 162 of the object 131 generated through the first 3D modeling (real-time 3D modeling) is superimposed on a captured image 161 captured by the image sensor 32. In Fig. 7, a dashed cross-hatching pattern indicated as the three-dimensional mesh 162 represents a polygon mesh generated through the first 3D modeling. This similarly applies to Fig. 8 and subsequent drawings. Furthermore, a depth-of-field region 163 indicated by applying a predetermined color or pattern is also superimposed on the monitor image 150. In the example illustrated in Fig. 7, for example, the depth-of-field region 163 is displayed so as to be distinguishable from other regions by applying a predetermined color onto the color captured image 161; alternatively, the depth-of-field region 163 may be represented in a highlighted manner by applying a gray color to the regions other than the depth-of-field region 163, for example. That is, as long as the depth of field is visualized, the depth-of-field region 163 may represent either the depth-of-field region or the regions other than the depth of field.

Fig. 8 is a diagram illustrating the depth of field at the camera position of the frustum 142A as viewed from the front of the object 131.

The depth of field is a distance in the depth direction over which an object remains in focus, and includes a region corresponding to a distance (distance in the imaging direction) between a front depth of field 172 in front of a focus plane (focus position) 171 and a rear depth of field 173 behind the focus plane 171. The depth of field is determined on the basis of a lens focal length, an aperture value (f-number), a subject distance (distance between the subject and the camera), and a permissible circle of confusion. The focal length, the aperture value, and the subject distance can be acquired as parameters during imaging, and the permissible circle of confusion may be set, for example, to the pixel pitch of the image sensor or to any value on the basis of the blur level tolerated to the user. Therefore, assuming that the permissible circle of confusion is set to a predetermined value on a setting screen or the like, the depth of field can be calculated by acquiring the parameters of the focal length, the aperture value, and the subject distance during imaging. This allows the imaging device 51 to present the depth of field to the user by displaying the three-dimensional mesh 162 and the depth-of-field region 163 superimposed on the captured image 161 during the imaging for the first 3D modeling, as in the monitor image 150 illustrated in Fig. 7. By visually identifying the depth-of-field region 163 displayed in a superimposed manner, the user can perform imaging while checking whether or not a portion desired to be imaged is in focus.

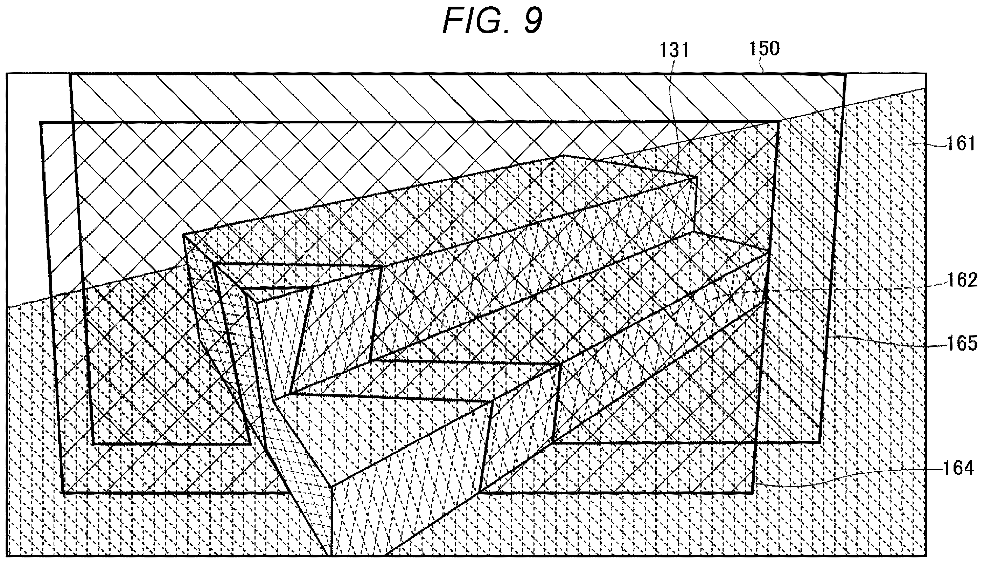

Fig. 9 illustrates another example of the presentation screen for presenting the depth of field.

In a monitor image 150 illustrated in Fig. 9, in a similar manner to the monitor image 150 illustrated in Fig. 7, the three-dimensional mesh 162 of the object 131 is superimposed on the captured image 161 captured by the image sensor 32. On the other hand, regarding the depth of field, a front depth-of-field plane 164 representing the plane of the front depth of field and a rear depth-of-field plane 165 representing the plane of the rear depth of field are displayed superimposed on the captured image 161. As described above, the depth of field may be represented by the front depth-of-field plane 164 and the rear depth-of-field plane 165.

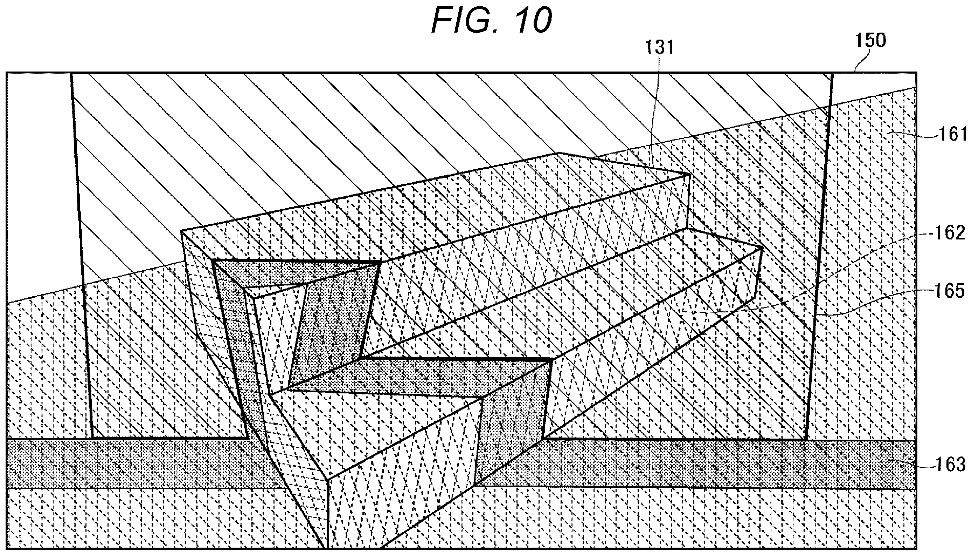

Fig. 10 illustrates another example of the presentation screen for presenting the depth of field.

In a monitor image 150 illustrated in Fig. 10, in a similar manner to the monitor image 150 illustrated in Fig. 7, the three-dimensional mesh 162 of the object 131 is superimposed on the captured image 161 captured by the image sensor 32. On the other hand, regarding the depth of field, the depth-of-field region 163 and the rear depth-of-field plane 165 are displayed superimposed on the captured image 161. As described above, the depth of field may be represented by the depth-of-field region 163 and the rear depth-of-field plane 165 so as to improve visibility in front of the subject.

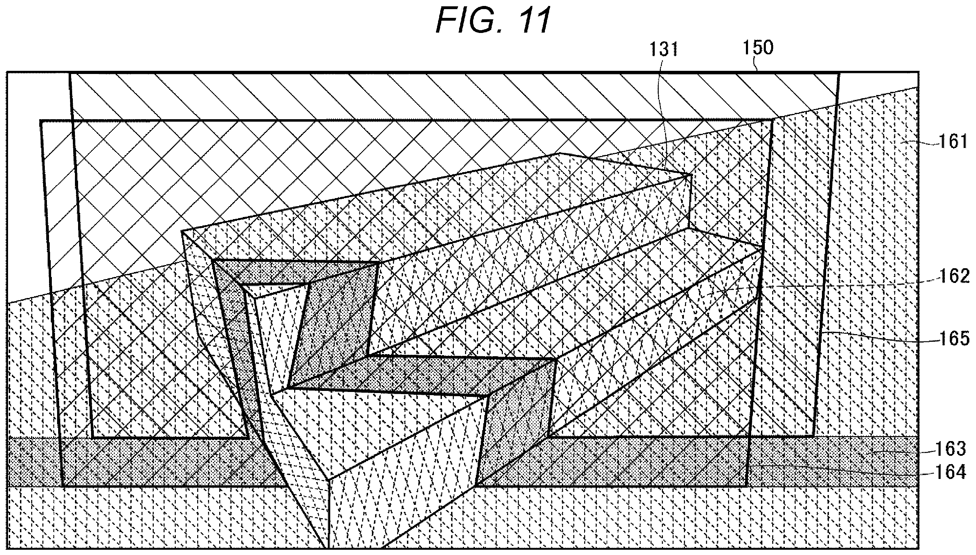

The presentation screen for presenting the depth of field may take various other forms. For example, as illustrated in Fig. 11, the depth-of-field region 163 illustrated in Fig. 7, the front depth-of-field plane 164 and the rear depth-of-field plane 165 illustrated in Fig. 9 may be displayed superimposed on the captured image 161 and the three-dimensional mesh 162.

By displaying the depth-of-field region 163, the front depth-of-field plane 164, and the rear depth-of-field plane 165 superimposed on the three-dimensional mesh 162 of the object 131 calculated using the depth information from the depth sensor 31, it is possible to visualize and present the depth of field over a range with a more pronounced three-dimensional width, thereby allowing the user to recognize the subject stereoscopically and easily determine which spatial region is in focus.

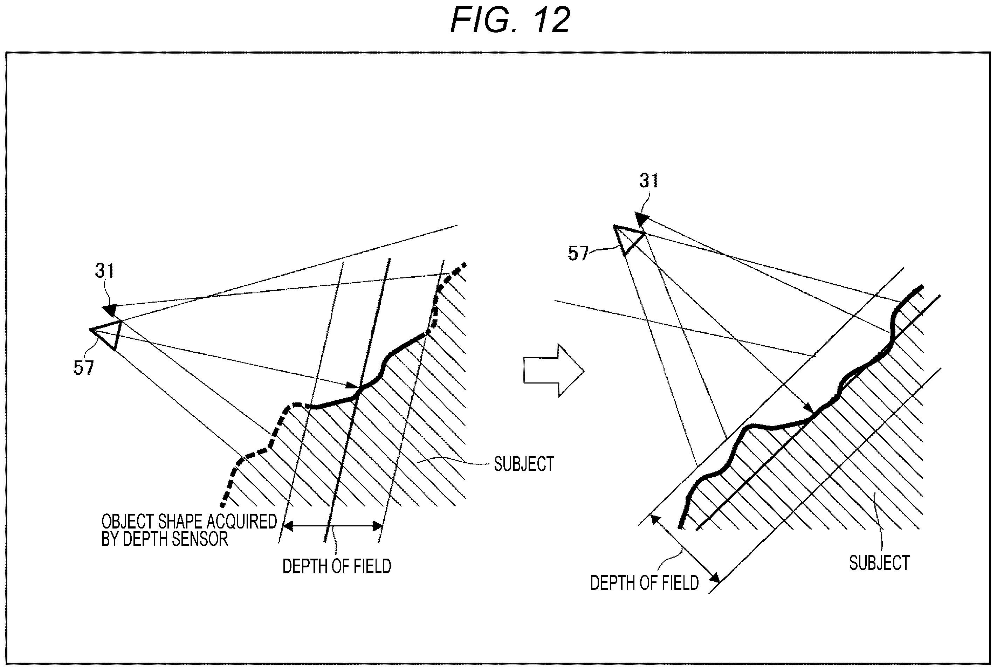

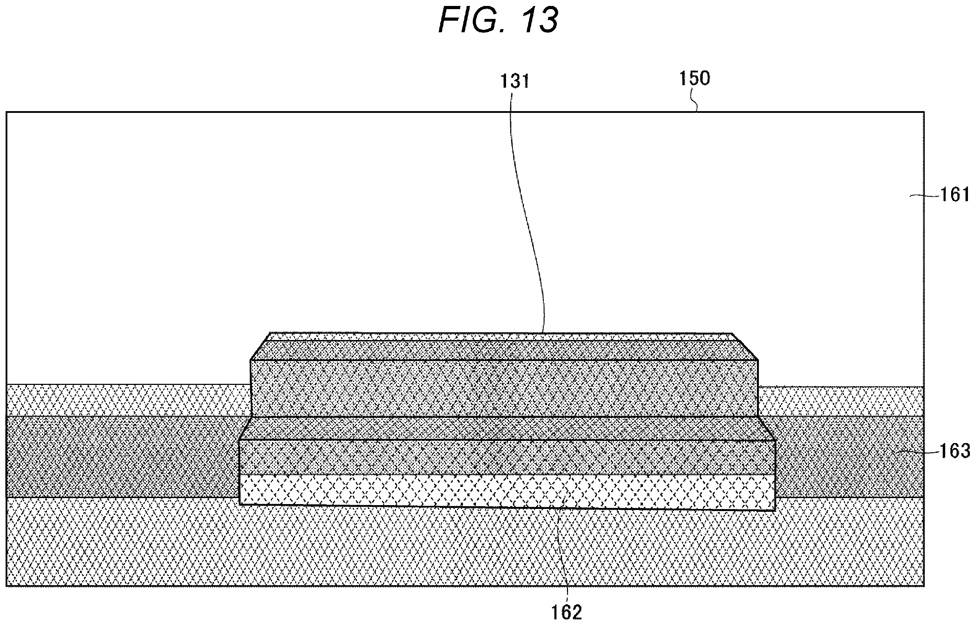

As illustrated on the left side of Fig. 12, the depth of field is calculated by means other than the imaging unit (image sensor) or focus control provided in the main body 57 of the imaging device 51, for example, on the basis of the distance to the subject measured by the depth sensor 31. It is therefore possible to measure and display the depth of field, regardless of the conditions of the subject such as the contrast and surface relief of the subject, for example. As a result, even in a case where the image captured by the imaging unit provided in the main body 57 is not in focus, it is possible to identify a region that is in focus. Furthermore, when the user attempts to maximize the depth of field displayed on the monitor image 150, the imaging device 51 is oriented to face the subject directly as illustrated on the right side of Fig. 12. Fig. 13 illustrates an example of the depth-of-field region 163 in a case where the object 131 is viewed from the front. That is, it is possible to guide, using the depth of field displayed on the monitor image 150 as a guide, the user to face the subject directly, thereby allowing the acquisition of high-quality captured images with a wider region in focus. Being rendered in three-dimensional space rather than in two dimensions, the depth of field can be viewed from angles other than the angle at which the shutter is released.

### <4. Configuration Example of Imaging Device>

Fig. 14 is a block diagram illustrating a configuration example of the imaging device 51.

Note that, in the present embodiment, for example, photogrammetry as the second 3D modeling is performed by a server device 40 rather than by the imaging device 51; therefore, the server device 40 is also illustrated. The server device 40 includes, for example, a cloud server, and the imaging device 51 is connected to the server device 40 via a predetermined network such as the Internet or a LAN.

Each component of the imaging device 51 is provided in any one of the sensor unit 52, the main body 57, or the interface device 53 in the example illustrated in Figs. 4 and 5, for example, but it is only required that the components be provided at appropriate locations as the entire imaging device 51. Furthermore, the imaging device 51 may include a device or a processing unit not illustrated as a block in Fig. 14, or there may be data flows or processing not indicated by arrows or the like.

The imaging device 51 includes, for example, the depth sensor 31, the image sensor 32, the IMU 33, a SLAM 34, a TSDF update unit 35, and a mesh generation unit 36 as components for performing real-time 3D modeling as the first 3D modeling.

The imaging device 51 further includes the imaging unit 20, an operation unit 21, an image processing unit 22, a storage unit 23, and a communication unit 29 as components for performing the image acquisition processing for the second 3D modeling. The above-described computation for displaying the depth of field is performed by the image processing unit 22. The image processing unit 22 includes a camera information acquisition unit 61, a depth-of-field calculation unit 62, and a depth-of-field rendering unit 63.

The imaging device 51 further includes an imaging control unit 24, a scoring processing unit 25, a display control unit 26, and an output unit 30 as components for various types of control and guides for the user. The display control unit 26 includes a superimposed image generation unit 27 and a display image generation unit 28. The output unit 30 includes an image output unit 65 and a sound/vibration output unit 66.

In the imaging device 51, the depth sensor 31 includes a Lidar sensor (ToF module) and the like, detects depth information indicating the depth to a subject, and supplies the depth information to the TSDF update unit 35. The image sensor 32 captures images of the subject to generate captured images, and supplies the generated captured images to the display image generation unit 28 and the SLAM 34. The images captured by the image sensor 32 are used for the first real-time 3D modeling. The IMU 33 detects inertial information (acceleration and angular velocity) of the imaging device 51 and supplies the inertial information to the SLAM 34.

The SLAM 34 performs self-localization on the basis of the supplied captured images and inertial information, and generates pose information indicating the position and orientation of the imaging device 51. The SLAM 34 supplies the generated pose information to the TSDF update unit 35, the image processing unit 22, the imaging control unit 24, and the display control unit 26.

The TSDF update unit 35 updates the TSDF on the basis of the pose information of the imaging device 51 and the depth information detected by the depth sensor 31, and supplies the updated TSDF to the mesh generation unit 36. The mesh generation unit 36 generates a mesh and texture using the updated TSDF. The mesh generation unit 36 supplies the mesh and texture data to the scoring processing unit 25 as 3D data (first 3D data) of the first 3D model (first three-dimensional shape information). Furthermore, the mesh generation unit 36 supplies the generated mesh data (mesh data) to the image processing unit 22.

The scoring processing unit 25 performs scoring processing on the basis of the supplied 3D data of the first 3D model and imaging viewpoint information supplied from the imaging control unit 24, that is, information indicating positions and orientations at which imaging (image acquisition processing) for the second 3D modeling has been performed. This scoring processing is performed to evaluate, using the three-dimensional shape information based on the first 3D model, accuracy of a second 3D model generated by the server device 40 using images captured so far by the imaging unit 20 and generate a scoring result (score).

For example, the scoring processing unit 25 may generate the scoring result for each local portion of the first three-dimensional shape information on the basis of the first three-dimensional shape information and positions and orientations at which imaging has been performed so far by the imaging unit 20. For example, the scoring processing unit 25 may generate the scoring result for each polygon of the mesh. The scoring processing unit 25 may acquire camera information of the imaging unit 20 and generate the scoring result on the basis of the camera information. The scoring processing unit 25 supplies the scoring result to the imaging control unit 24 and the superimposed image generation unit 27.

The imaging control unit 24 performs imaging control processing as the image acquisition processing of the imaging unit 20. For example, the imaging control unit 24 sets a portion of a 3D object that is the subject where the image acquisition processing is to be performed (hereinafter, referred to as a recommended imaging position) on the basis of the first three-dimensional shape information of the first 3D model supplied via the scoring processing unit 25. In order to perform 3D modeling based on photogrammetry with a certain quality, it is necessary to perform imaging while facing the imaging plane of the subject directly from a certain distance. Furthermore, it is necessary to adjust the imaging interval according to the sizes of front and rear common fields of view, determined by surface relief. Therefore, the imaging control unit 24 sets, in accordance with the shape, surface relief, and the like of each portion of the 3D object, recommended imaging positions for the 3D object so as to allow images that overlap with an appropriate overlap ratio to be captured. The appropriate overlap ratio is set to, for example, about 25% to 75%. The amount of information increases as the overlap ratio increases. The imaging control unit 24 may use the scoring result to set appropriate recommended imaging positions. For example, the lower the score, the higher the density at which recommended imaging positions are set.

The imaging control unit 24 sets the plurality of recommended imaging positions (points at which the image acquisition processing is to be performed) for the 3D object that is the subject as described above, but the user cannot recognize where to image only on the basis of the setting. Therefore, the imaging control unit 24 can present a guide display to guide the user to the set recommended imaging positions by supplying information regarding the recommended imaging positions and the like to the display control unit 26.

The imaging control unit 24 supplies, to the display control unit 26, information necessary for guiding the user to move the imaging device 51 to the recommended imaging position. Then, the imaging control unit 24 determines an imaging timing by determining whether or not the user has moved to the recommended imaging position on the basis of the pose information of the imaging device 51. In a case of determining that it is the imaging timing, the imaging control unit 24 transmits imaging control information for controlling the shutter to the imaging unit 20 to cause the imaging unit 20 to perform imaging as the image acquisition processing. Furthermore, the imaging control unit 24 supplies, to the scoring processing unit 25, the imaging viewpoint information indicating the position and orientation at which imaging is performed by the imaging unit 20.

The imaging unit 20 includes an image sensor and captures images of the subject to generate captured images. In other words, the imaging unit 20 captures images as the image acquisition processing under shutter control by the imaging control unit 24 to generate captured images for the second 3D modeling, and supplies the captured images to the image processing unit 22. Furthermore, the imaging unit 20 supplies the focal length, the aperture value (f-number), and the subject distance, which are parameters for calculating the depth of field, to the image processing unit 22 as the camera information.

Furthermore, the imaging unit 20 may supply, to the scoring processing unit 25, the camera information, that is, internal parameters, external parameters, field-of-view information, and the like of the imaging unit 20. Furthermore, the imaging unit 20 may supply, to the imaging control unit 24, imaging timing information indicating an imaging timing not based on the shutter control by the imaging control unit 24, such as the user's shutter operation using the operation unit 21.

The operation unit 21 serves as an operation element operable by the user, and includes a shutter operation element, a zoom operation element, a focus operation element, and other operation elements for various camera operations. The imaging unit 20 may perform imaging in accordance with a user's shutter operation instruction supplied from the operation unit 21 to generate a captured image.

Furthermore, the camera information acquisition unit 61 of the image processing unit 22 acquires the focal length, the aperture value (f-number), and the subject distance, which are parameters for calculating the depth of field, as the camera information. Furthermore, the camera information acquisition unit 61 retrieves, from the storage unit 23, a value used as the permissible circle of confusion, such as the pixel pitch of the image sensor or the case set by the user. The camera information acquisition unit 61 supplies each parameter such as the focal length, the aperture value (f-number), the subject distance, and the permissible circle of confusion acquired as the camera information to the depth-of-field calculation unit 62.

The depth-of-field calculation unit 62 calculates the depth of field on the basis of each parameter supplied from the camera information acquisition unit 61, and supplies depth-of-field information indicating the depth of field to the imaging control unit 24 and the depth-of-field rendering unit 63. The depth-of-field information includes information regarding the focus position, front depth of field, and rear depth of field.

The depth-of-field information is supplied from the depth-of-field calculation unit 62 to the depth-of-field rendering unit 63, and the pose information of the imaging device 51 is supplied from the SLAM 34 to the depth-of-field rendering unit 63. Furthermore, at least data of the mesh (mesh data) of the first 3D data of the first 3D model is supplied from the mesh generation unit 36. The depth-of-field rendering unit 63 generates, using the depth-of-field information, the pose information of the imaging device 51, and the mesh data, a depth-of-field image in which a region indicating the depth of field is visualized. The depth-of-field image is, for example, an image in which the mesh corresponding to the depth of field in the three-dimensional shape (three-dimensional mesh shape) of the first 3D model represented as a mesh is colored like the depth-of-field region 163 illustrated in Fig. 7. The depth-of-field rendering unit 63 supplies the generated depth-of-field image to the superimposed image generation unit 27 of the display control unit 26.

Furthermore, the image processing unit 22 performs predetermined image processing on the captured images for the second 3D modeling generated by the imaging unit 20. The details of this image processing may be determined as desired. The image processing unit 22 performs signal processing such as color separation processing, color conversion processing, defect correction, noise reduction, AWB, and gamma correction on the captured images. Furthermore, the image processing unit 22 performs encoding processing on the captured images. The encoded data obtained by performing the encoding processing on the captured image is supplied to the communication unit 29 and the storage unit 23.

The storage unit 23 records the encoded data supplied from the image processing unit 22 on a recording medium. The communication unit 29 transmits the encoded data supplied from the image processing unit 22 to another information processing device (i.e., a server or the like). For example, the communication unit 29 sequentially uploads the encoded data obtained by encoding the captured image for the second 3D modeling to the server device 40.

### <Configuration Example of Server Device>

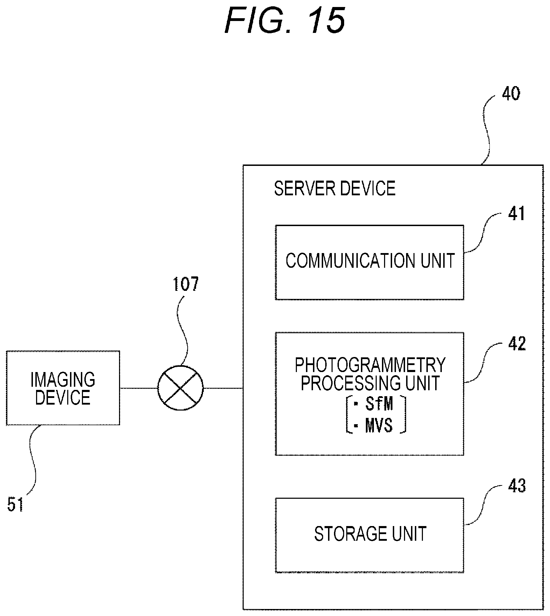

Fig. 15 illustrates a configuration example of the server device 40 that communicates data with the imaging device 51 over a network 107. The encoded data of the captured image obtained by the imaging unit 20 through imaging as the image acquisition processing is uploaded to the server device 40, and the server device 40 performs the second 3D modeling.

The server device 40 includes a communication unit 41, a photogrammetry processing unit 42, and a storage unit 43.

The communication unit 41 sequentially receives the encoded data of the captured image uploaded from the imaging device 51. Furthermore, the communication unit 41 transmits information regarding a 3D model generated by the photogrammetry processing unit 42 to the imaging device 51.

The storage unit 43 stores the encoded data of the captured image uploaded from the imaging device 51 and the 3D data generated by the photogrammetry processing unit 42.

The photogrammetry processing unit 42 decodes the uploaded encoded data and performs 3D modeling on the captured images after decoding. For example, the photogrammetry processing unit 42 generates a second 3D model (second three-dimensional shape information) by performing processing such as SfM or MVS on the basis of the captured images generated by the imaging unit 20.

In the processing of SfM, for example, the photogrammetry processing unit 42 searches for corresponding points between the captured images, derives the positions and orientations of the imaging device 51 using epipolar constraints, determines the position of each corresponding point in three-dimensional space through triangulation based on the positions and orientations of the imaging device 51, and optimizes the entirety of the determined three-dimensional point cloud through bundle adjustment. In the processing of MVS, for example, the photogrammetry processing unit 42 further searches for dense corresponding points using the three-dimensional point cloud, adds three-dimensional points, and then performs meshing and texturing as post-processing to generate the second 3D model.

The photogrammetry processing unit 42 encodes data (3D data) of the 3D model generated as described above, supplies the encoded data to the storage unit 43 to record the encoded data on the recording medium. Furthermore, the photogrammetry processing unit 42 supplies the encoded data of the second 3D model to the communication unit 41 to transmit the encoded data to the imaging device 51.

Note that, after a required number of captured images is obtained, the photogrammetry processing unit 42 performs photogrammetry processing to generate a 3D model, but performs simplified 3D modeling to generate a 3D model as a preview image while the imaging device 51 is performing the imaging operation. For example, the server device 40 performs 3D modeling for preview each time a captured image is uploaded from the imaging device 51 to generate and update a 3D model. The 3D model at each time point is transmitted to the imaging device 51.

Note that the server device 40 includes the photogrammetry processing unit 42 as described above, but the server device 40 may instead include a neural rendering processing unit and generate the second 3D model through neural rendering.

Returning to Fig. 14, in the imaging device 51, the communication unit 29 receives the 3D model for preview during imaging. The received 3D model for preview is supplied to the scoring processing unit 25 and the display control unit 26.

The display control unit 26 controls display of the captured image and display including a guide for the user's imaging operation. The superimposed image generation unit 27 acquires an image to be superimposed on the captured image of the subject, such as the depth-of-field image generated as an image for superimposition by the depth-of-field rendering unit 63, and supplies the same to the display image generation unit 28. Furthermore, the superimposed image generation unit 27 generates an image indicating the recommended imaging position, the imaging timing, and the like as a guide, and supplies the generated image to the display image generation unit 28 as an image for superimposition.

The display image generation unit 28 generates a display image by combining the image for superimposition generated by the superimposed image generation unit 27 with the captured image supplied from the image sensor 32 such that the image for superimposition is superimposed on the captured image. For example, the display image generation unit 28 generates the monitor image 150 illustrated in Fig. 7, 9, or 10 as a display image for guiding the depth of field. Furthermore, the display image generation unit 28 may include, in the display image, the 3D model supplied from the server device 40 or thumbnail data of the 3D model.

The image output unit 65 of the output unit 30 includes, for example, display devices serving as displays 54 and 55, and the like. The image output unit 65 displays the captured image of the subject and images for various guides under the control of the display control unit 26. The sound/vibration output unit 66 of the output unit 30 includes, for example, a vibrating element such as a piezoelectric element actuator, a piezoelectric actuator, a linear resonant actuator (LRA), a voice coil motor, or an eccentric motor, and guides the user by generating vibrations at a predetermined timing under the control of the imaging control unit 24. Furthermore, the sound/vibration output unit 66 includes, for example, a speaker, and guides the user by generating sound (including voice) at a predetermined timing under the control of the imaging control unit 24.

By presenting the depth-of-field information to the user, the imaging device 51 having such a configuration allows the user to adjust the distance to the subject to a more appropriate distance and capture the image of the 3D object, and allows the user to perform 3D modeling in the server device 40 using the captured image. Specifically, the imaging device 51 outputs a guide display and sound so as to allow the user to perform the imaging operation at a more appropriate subject distance. It is therefore possible to generate, using the imaging device 51, more accurate 3D data while suppressing an increase in the load of 3D modeling.

Note that the server device 40 performs the second 3D modeling in the above example, but the imaging device 51 may be equipped with, for example, a function equivalent to the photogrammetry processing unit 42 and instead perform the second 3D modeling.

### <Configuration Example of Information Processing Device>

Here, an information processing device that can be configured as the imaging device 51 or the server device 40 will be described. For example, a portable information processing device such as a smartphone or a tablet terminal can be used as the imaging device 51. Furthermore, the server device 40 is also implemented by an information processing device.

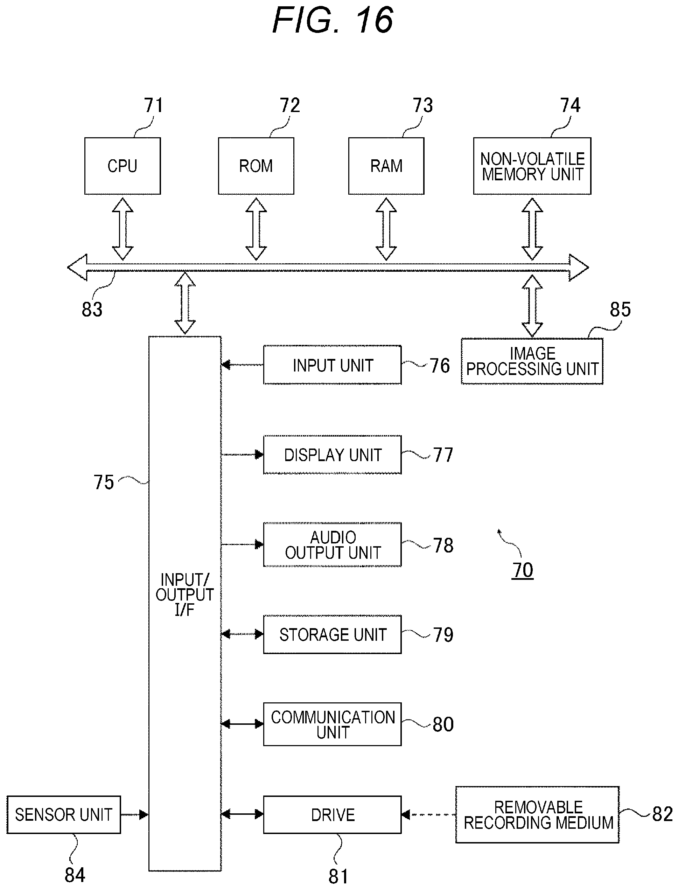

Fig. 16 is a block diagram illustrating a configuration example of the information processing device.

An information processing device 70 illustrated in Fig. 16 is a device, such as a computer device, capable of performing information processing, particularly image processing. Possible examples of the information processing device 70 include a personal computer, a workstation, a portable terminal device such as a smartphone or a tablet, a video editing device, and the like. Alternatively, the information processing device 70 may be a computer device configured as a server device or a computing device in cloud computing.

A central processing unit (CPU) 71 of the information processing device 70 illustrated in Fig. 16 performs various types of processing in accordance with a program stored in a non-volatile memory unit 74 such as a read only memory (ROM) 72 or, for example, an electrically erasable programmable read-only memory (EEP-ROM), or a program loaded from a storage unit 79 into a random access memory (RAM) 73. The RAM 73 also stores, as appropriate, data and the like necessary for the CPU 71 to perform the various types of processing.

An image processing unit 85 is configured as a processor that performs various types of video processing. For example, the image processing unit 85 is a processor capable of performing one or more types of processing including 3D modeling processing, rendering, database processing, image processing on captured images including color/luminance adjusting processing and color conversion processing, encoding processing, decoding processing, image editing processing, image analysis/detection processing, and the like.

The image processing unit 85 can be implemented by, for example, a CPU separate from the CPU 71, a graphics processing unit (GPU), general-purpose computing on graphics processing units (GPGPU), an artificial intelligence (AI) processor, or the like. Note that the image processing unit 85 may be provided as a function in the CPU 71.

The CPU 71, the ROM 72, the RAM 73, the non-volatile memory unit 74, and the image processing unit 85 are interconnected via a bus 83. Furthermore, an input/output interface 75 is also connected to the bus 83.

An input unit 76 including an operation element or an operation device is connected to the input/output interface 75. Possible examples of the input unit 76 include various types of operation elements and operation devices such as a keyboard, a mouse, keys, a trackball, a dial, a touch panel, a touch pad, and a remote controller. The user's operation is detected by the input unit 76, and a signal corresponding to the input operation is interpreted by the CPU 71. The possible examples of the input unit 76 further include a microphone. It is also possible to input voice uttered by the user as operation information.

Furthermore, a display unit 77 including a liquid crystal display (LCD), an organic electro-luminescence (EL) panel, or the like and an audio output unit 78 including a speaker or the like are integrally or separately connected to the input/output interface 75. The display unit 77 performs various types of display. The display unit 77 includes, for example, a display device provided in a housing of the information processing device 70, a separate display device connected to the information processing device 70, or the like. The display unit 77 displays various images, operation menus, icons, messages, and the like, that is, a graphical user interface (GUI), on a display screen on the basis of instruction from the CPU 71.

The storage unit 79 including a hard disk drive (HDD), a solid state drive (SSD), or the like, or a communication unit 80 may be connected to the input/output interface 75.

The storage unit 79 can store various types of data and programs. A database can also be constructed in the storage unit 79.

The communication unit 80 performs communication processing via a transmission path such as the Internet, communication with various devices such as an external DB, an editing device, and an information processing device via wired/wireless communication, bus communication, and the like.

A drive 81 is also connected to the input/output interface 75, as necessary, and a removable recording medium 82 such as a magnetic disk, an optical disc, a magneto-optical disk, or a semiconductor memory is loaded into the drive 81 as appropriate. The drive 81 enables reading of video data, various types of computer programs, and the like from the removable recording medium 82. The read data is stored in the storage unit 79, and video and audio included in the data are output from the display unit 77 and the audio output unit 78. Furthermore, the computer programs and the like read from the removable recording medium 82 are installed in the storage unit 79, as necessary.

In a case where the information processing device 70 is used as the imaging device 51, the information processing device 70 includes a sensor unit 84. The sensor unit 84 has a sensor configuration necessary as the depth sensor 31, the image sensor 32, the IMU 33, and the imaging unit 20 described with reference to Fig. 14. For example, the sensor unit 84 includes a Lidar sensor (ToF sensor), a plurality of image sensors, an angular velocity sensor, an acceleration sensor, and the like.

In the information processing device 70, for example, software for the processing in the present embodiment can be installed via network communication by the communication unit 80 or the removable recording medium 82. Alternatively, the software may be stored in advance in the ROM 72, the storage unit 79, or the like.

### <5. Processing Flow of Depth-of-Field Display Control Processing>

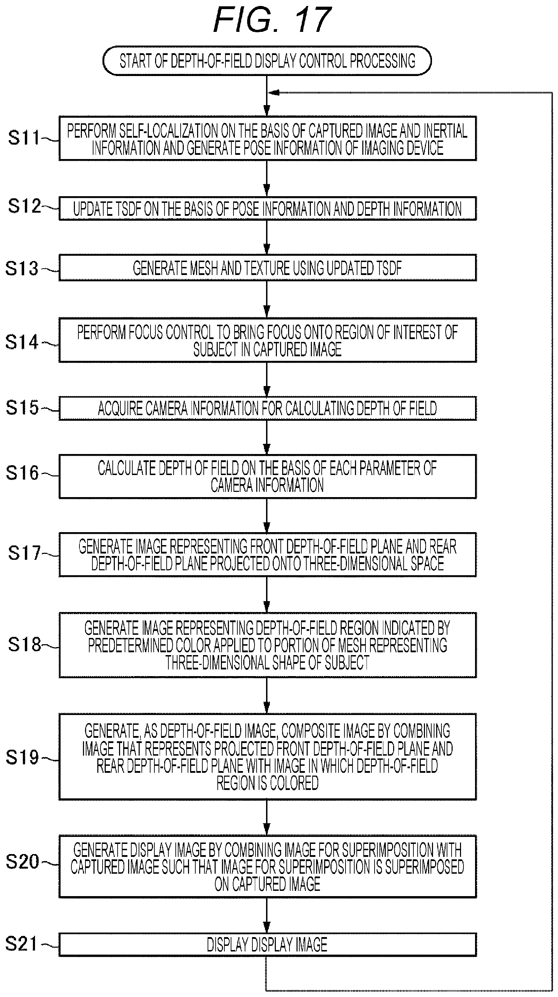

Next, depth-of-field display control processing of calculating the depth of field and performing superimposed display will be described with reference to a flowchart in Fig. 17. This processing is started, for example, when sensor information regarding the subject is acquired by the depth sensor 31, the image sensor 32, and the like of the sensor unit 52. In the depth-of-field display control processing illustrated in Fig. 17, an example of generating and displaying the monitor image 150 illustrated in Fig. 11 will be described.

First, in step S11, the SLAM 34 performs self-localization on the basis of the captured image supplied from the image sensor 32 and the inertial information supplied from the IMU 33, and generates pose information indicating the position and orientation of the imaging device 51. The SLAM 34 supplies the generated pose information to the TSDF update unit 35, the image processing unit 22, the imaging control unit 24, and the display control unit 26.

In step S12, the TSDF update unit 35 updates the TSDF on the basis of the pose information of the imaging device 51 supplied from the SLAM 34 and the depth information detected by the depth sensor 31, and supplies the updated TSDF to the mesh generation unit 36.

In step S13, the mesh generation unit 36 generates a mesh and texture using the TSDF updated by TSDF update unit 35. The mesh generation unit 36 supplies the generated mesh and texture to the scoring processing unit 25 as 3D data (first 3D data) of the first 3D model (first three-dimensional shape information). Furthermore, the mesh generation unit 36 supplies the generated mesh data to the image processing unit 22.

In step S14, the imaging unit 20 performs focus control to bring the focus (focus position) onto a region of interest of the subject in the captured image. For the focus control, for example, it is possible to use a phase difference signal of phase-detection pixels included in the image sensor, contrast AF for determining the focus position on the basis of the contrast of the captured image captured by the image sensor, or the like. Note that the user may bring the focus (focus position) onto the region of interest of the subject using manual focus.

In step S15, the camera information acquisition unit 61 of the image processing unit 22 acquires camera information for calculating the depth of field. Specifically, the camera information acquisition unit 61 acquires the focal length, the aperture value (f-number), and the subject distance from the imaging unit 20 as the camera information. Furthermore, the camera information acquisition unit 61 retrieves a value such as the pixel pitch of the image sensor used as the permissible circle of confusion from the storage unit 23. The value as the permissible circle of confusion may be stored in advance in the camera information acquisition unit 61.

In step S16, the depth-of-field calculation unit 62 calculates the depth of field on the basis of each parameter of the camera information supplied from the camera information acquisition unit 61, and supplies depth-of-field information indicating the depth of field to the imaging control unit 24 and the depth-of-field rendering unit 63. The depth-of-field information includes information regarding the focus position, front depth of field, and rear depth of field.

In step S17, on the basis of the pose information of the imaging device 51 supplied from the SLAM 34 and the depth-of-field information supplied from the depth-of-field calculation unit 62, the depth-of-field rendering unit 63 generates an image that represents the front depth-of-field plane 164 indicating the front depth of field and the rear depth-of-field plane 165 indicating the rear depth of field, projected onto three-dimensional space relative to the camera position of the imaging unit 20.

In step S18, the depth-of-field rendering unit 63 generates, on the basis of the depth-of-field information supplied from the depth-of-field calculation unit 62, an image that represents the depth-of-field region 163 indicated by a predetermined color or pattern applied to a portion of the three-dimensional mesh 162 representing the three-dimensional shape of the subject supplied from the mesh generation unit 36.

In step S19, the depth-of-field rendering unit 63 generates, as a depth-of-field image, a composite image by combining the image that represents the front depth-of-field plane 164 and the rear depth-of-field plane 165 projected onto three-dimensional space with the image in which the depth-of-field region 163 is colored, and supplies the composite image to the superimposed image generation unit 27 of the display image generation unit 28. In a case where there is another image (i.e., a guide image indicating, for example, imaging timing, or the like) to be superimposed on the captured image of the subject, the superimposed image generation unit 27 also combines the images and supplies the composite image to the display image generation unit 28 as an image for superimposition.

In step S20, the display image generation unit 28 generates a display image in which the image for superimposition supplied from the superimposed image generation unit 27 is combined with the captured image supplied from the image sensor 32 so as to be superimposed on the captured image. The generated display image is supplied to the image output unit 65 of the output unit 30.

In step S21, the image output unit 65 displays the display image supplied from the display image generation unit 28. As a result, the monitor image 150 illustrated in Fig. 11 is displayed on the display 54 of the interface device 53, for example.

The processing of steps S1 to S21 described above is repeatedly performed until the 3D modeling processing is instructed to terminate, such as when an imaging termination operation is performed. In the monitor image 150 displayed on the display 54, the depth-of-field region 163, the front depth-of-field plane 164, and the rear depth-of-field plane 165 are updated and displayed according to the pose information of the imaging device 51, the captured image, and the like.

### <6. Processing Flow of Imaging Control Processing>

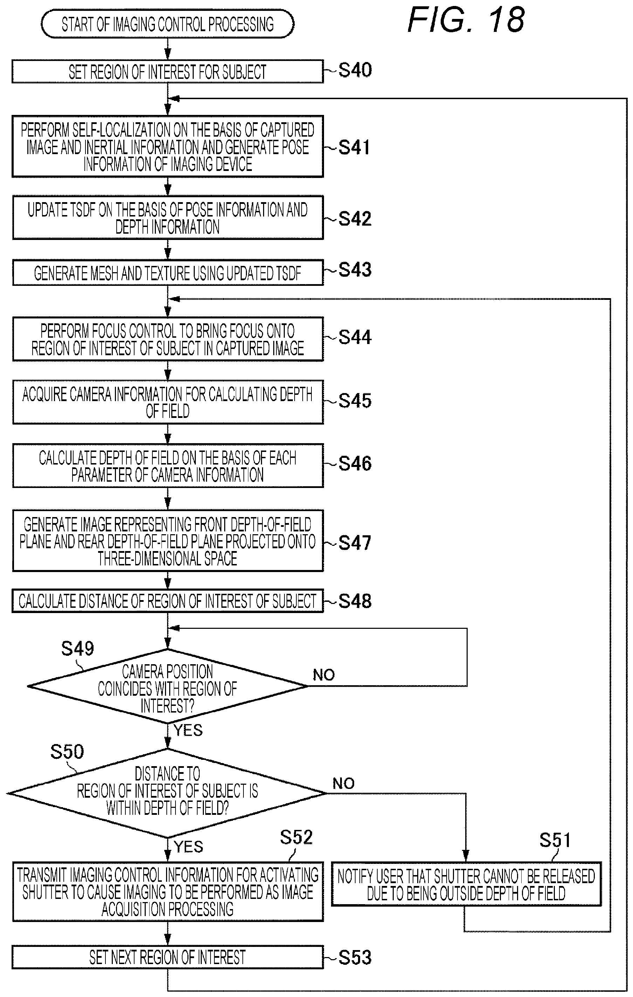

The imaging device 51 can perform shutter control (image acquisition processing) automatically at an optimal timing without requiring the user to perform a shutter operation. Imaging control processing including both the automatic image acquisition processing and the depth-of-field control will be described with reference to a flowchart in Fig. 18. This processing is started, for example, when sensor information regarding the subject is acquired by the depth sensor 31, the image sensor 32, and the like of the sensor unit 52.

First, in step S40, the imaging control unit 24 sets a region of interest to be focused on as an imaging target for a subject included in a captured image. The imaging control unit 24 sets a plurality of recommended imaging positions for the subject on the basis of, for example, the level of detail of a pre-set 3D model to be generated, the intervals of imaging positions at which captured images overlap with an appropriate overlap ratio, and the like. Then, the imaging control unit 24 sets a predetermined one of the plurality of set recommended imaging positions as the region of interest. The captured image here may be an image captured by the image sensor 32 or by the imaging unit 20.

The processing of steps S41 to S47 illustrated in Fig. 18 is similar to the processing of steps S11 to S17 illustrated in Fig. 17, respectively, and thus the description thereof will be omitted.

In step S48, the imaging control unit 24 calculates the distance to the region of interest of the subject on the basis of the pose information of the imaging device 51 supplied from the SLAM 34 and the first three-dimensional shape information of the first 3D model supplied via the scoring processing unit 25.

In step S49, the imaging control unit 24 determines whether or not the camera position (the position of the imaging device 51) coincides with the region of interest. The processing of step S49 is repeatedly performed until the camera position is determined to be coincident with the region of interest, and in a case where the camera position is determined to be coincident with the region of interest, the processing proceeds to step S50.

In step S50, the imaging control unit 24 determines whether or not the distance to the region of interest of the subject is within the depth of field on the basis of the distance to the region of interest of the subject and the depth-of-field information supplied from the depth-of-field calculation unit 62.

In a case where it is determined in step S50 that the distance to the region of interest of the subject is not within the depth of field (outside the depth of field), the processing proceeds to step S51, and the imaging control unit 24 supplies a predetermined control signal to the output unit 30 to notify the user that the shutter cannot be released because the distance is outside the depth of field. The notification to the user may be provided by displaying an image via the image output unit 65 or by outputting sound or vibration via the image output unit 65. After step S51, the processing returns to step S44, and the processing of step S44 and subsequent steps is repeated.

On the other hand, in a case where it is determined in step S50 that the distance to the region of interest of the subject is within the depth of field, the processing proceeds to step S52, and the imaging control unit 24 transmits imaging control information for activating the shutter to the imaging unit 20 and causes the imaging unit 20 to perform imaging as the image acquisition processing. Upon receiving the imaging control information, the imaging unit 20 performs imaging.

In step S53, the imaging control unit 24 sets the next region of interest. That is, the imaging control unit 24 sets one recommended imaging position for which imaging has not yet been completed among the plurality of recommended imaging positions as the next region of interest. After step S53, the processing returns to step S41, and the processing of steps S41 to S53 is performed again.

In the imaging control processing illustrated in Fig. 18, the imaging control unit 24 determines whether or not the region of interest is within the depth of field, which eliminates the need for the user to determine whether or not the region of interest is within the depth of field. Therefore, although the processing of steps S18 and S19 illustrated in Fig. 17, that is, the processing of generating the image indicating the depth-of-field region 163 and superimposing the image on the captured image is not performed, the depth-of-field region 163 may be displayed superimposed on the captured image, in a similar manner to Fig. 17.

### <7. Guide Display Indicating Result of Depth-of-Field Determination>

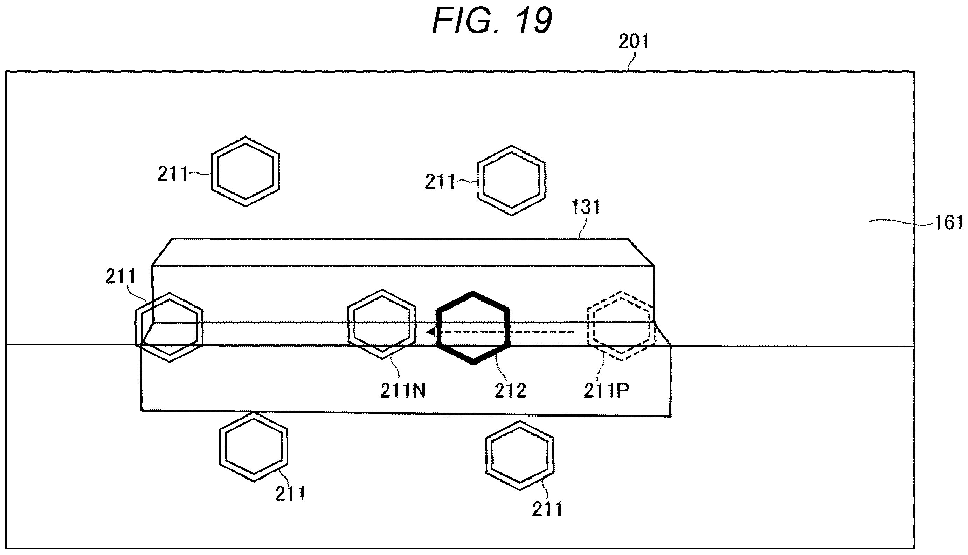

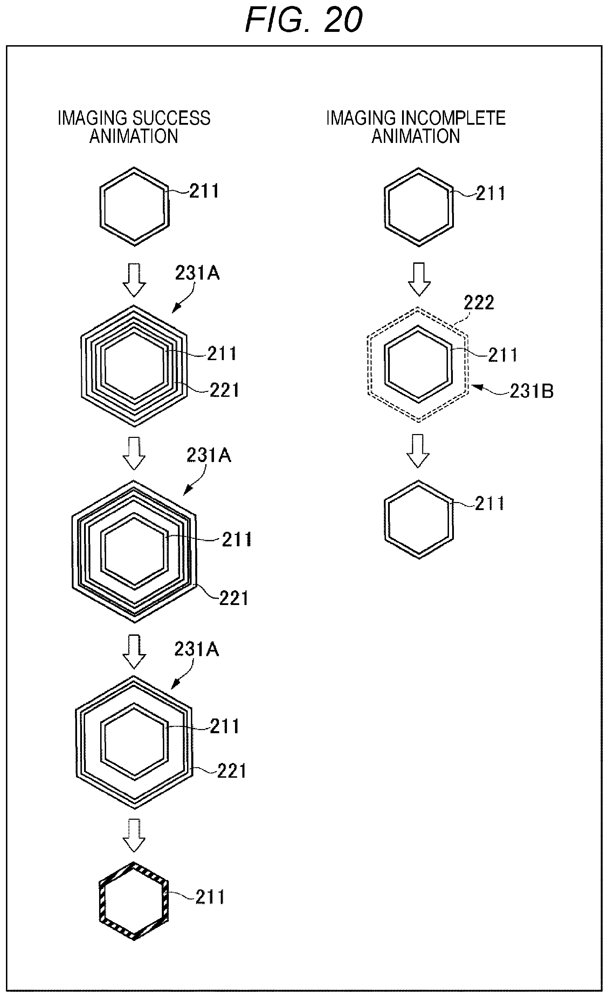

With reference to Figs. 19 and 20, a guide display indicating a result of a determination as to whether or not the distance to the region of interest is within the depth of field, the determination being made in the imaging control processing illustrated in Fig. 18, will be described.

Fig. 19 illustrates an example of a navigation screen that is displayed on the display 54 of the interface device 53 during the imaging for the first 3D modeling.

On a navigation screen 201 illustrated in Fig. 19, a target indicator 211 and a self-indicator 212 are displayed superimposed on the captured image 161 captured by the image sensor 32. The target indicator 211 is a guide mark indicating a recommended imaging position set for the subject on the basis of the level of detail of the 3D model, the overlap ratio, the orientation (frontal alignment) with respect to the subject, and the like. The self-indicator 212 is a guide mark indicating the position of the imaging device 51 (camera position). Here, an example in which the target indicator 211 and the self-indicator 212 each have a hexagonal shape is illustrated, but the shape of these indicators is not limited to the hexagonal shape. For example, the shape may be a quadrangular shape or a circular shape. The target indicator 211 and the self-indicator 212 are displayed in different forms, for example, by using frames of different colors and brightness levels, or by using different types of frame lines, thereby allowing the user to distinguish between the target indicator 211 and the self-indicator 212. For example, the target indicator 211 is displayed in white, and the self-indicator 212 is displayed in yellow. The self-indicator 212 is arranged substantially at the center of the angle of view, and the position of the target indicator 211 moves in response to the movement of (the camera position of) the user.

In the navigation screen 201 illustrated in Fig. 19, the user completes the imaging of a target indicator 211P indicated by a dashed line among a plurality of the target indicators 211, and then moves leftward to the position of a target indicator 211N. The target indicator 211P indicated by a dashed line indicates a position where imaging is completed. The size of the hexagonal shape varies in a manner that depends on the distance between the subject and the imaging device 51. The user can appropriately maintain the distance to the subject by adjusting the distance to the subject (by moving) to make the size of the target indicator 211 substantially coincide with the size of the self-indicator 212. Then, when the target indicator 211N and the self-indicator 212 are considered to be at the same (or substantially the same) position, it is determined in step S49 illustrated in Fig. 18 that the camera position coincides with the region of interest.

In a case where it is determined in step S49 illustrated in Fig. 18 that the camera position coincides with the region of interest, the imaging control unit 24 determines whether or not the distance to the region of interest of the subject is within the depth of field (step S50). In a case where it is determined that the distance to the region of interest of the subject is within the depth of field, control to activate the shutter is performed, and imaging as the image acquisition processing is performed. In a case where imaging is performed, the imaging control unit 24 notifies the user via the output unit 30 that imaging has been successfully performed (imaging has been completed). On the other hand, in a case where it is determined that the distance to the region of interest of the subject is outside the depth of field, the imaging control unit 24 notifies the user via the output unit 30 that imaging has not yet been completed, that is, the shutter cannot be released because the distance is outside the depth of field.

Fig. 20 illustrates an example of a display image (animation) representing that imaging has been successfully performed and imaging has not yet been completed on the navigation screen 201.

An imaging success animation 231A is an example of an animation via which the image output unit 65 notifies the user that imaging has been successfully performed.

In the imaging success animation 231A, an animation is displayed in which several hexagonal frames 221 are generated around the original target indicator 211, each expanding, and disappearing once reaching a certain size. Furthermore, after displaying such an imaging success animation 231A, the display control unit 26 changes the display form of the target indicator 211. For example, the white target indicator 211 is changed to gray. In Fig. 19, hatching indicates that the color of the target indicator 211 has changed after the end of the imaging success animation 231A.

An imaging success animation 231B is an example of an animation via which the image output unit 65 notifies the user that imaging has not yet been completed.

The imaging success animation 231B is an animation less striking than the imaging success animation 231A. For example, this is an example in which one frame 222 begins to expand but disappears immediately. Alternatively, the color of the target indicator 211 may be changed.

Fig. 20 illustrates an example in which the user is notified that imaging has been successfully performed and imaging has not yet been completed via an image (animation); however, the sound/vibration output unit 66 may generate sound or vibration to notify the user that imaging has been successfully performed and imaging has not yet been completed. Alternatively, all three or any two of the image, sound, and vibration may be simultaneously output to notify the user that imaging has been successfully performed and imaging has not yet been completed.

Note that, in the imaging control processing illustrated in Fig. 18, in a case where it is determined that the distance to the region of interest is outside the depth of field, the user is notified via any one of the image, sound, or vibration without releasing the shutter; however, a notification to prompt the user to perform re-imaging by releasing the shutter, that is, by performing imaging as the image acquisition processing may be provided.

Alternatively, the imaging control unit 24 may notify the imaging unit 20 or the like that the distance to the region of interest is outside the depth of field without providing the notification to prompt re-imaging to the user, continue the focus control, and perform automatic control to bring the distance to the region of interest within the depth of field. The user may be notified that "focus control in progress" or the like.

Furthermore, the imaging control unit 24 may control the camera information such as the aperture and the focus position (subject distance) on the basis of the three-dimensional shape of the subject to adjust the depth of field. That is, since the first three-dimensional shape information of the first 3D model is supplied to the imaging control unit 24 via the scoring processing unit 25, the imaging control unit 24 can determine the degree of flatness and complexity of the subject shape. In a case where it is determined that the three-dimensional shape of the subject is relatively flat, the imaging control unit 24 performs control to bring the entire subject into focus while setting the aperture and the like to achieve a relatively shallow depth of field. On the other hand, in a case where it is determined that the three-dimensional shape of the subject is complex and has a depth range, the imaging control unit 24 sets the aperture and the like to increase the depth of field and performs control to bring the entire subject into focus as much as possible.

### <8. Manual AF Operation Screen>

An example has been described in which the depth of field is calculated on the basis of the imaging parameters of the imaging device 51, specifically, the focal length, the aperture value (f-number), the subject distance, and the permissible circle of confusion, and at least one of the depth-of-field region 163, the front depth-of-field plane 164, or the rear depth-of-field plane 165 is displayed superimposed on the captured image 161; alternatively, the user may specify the focus position, and the depth-of-field region 163 or the like may be displayed superimposed on the captured image 161 according to the focus position specified by the user.

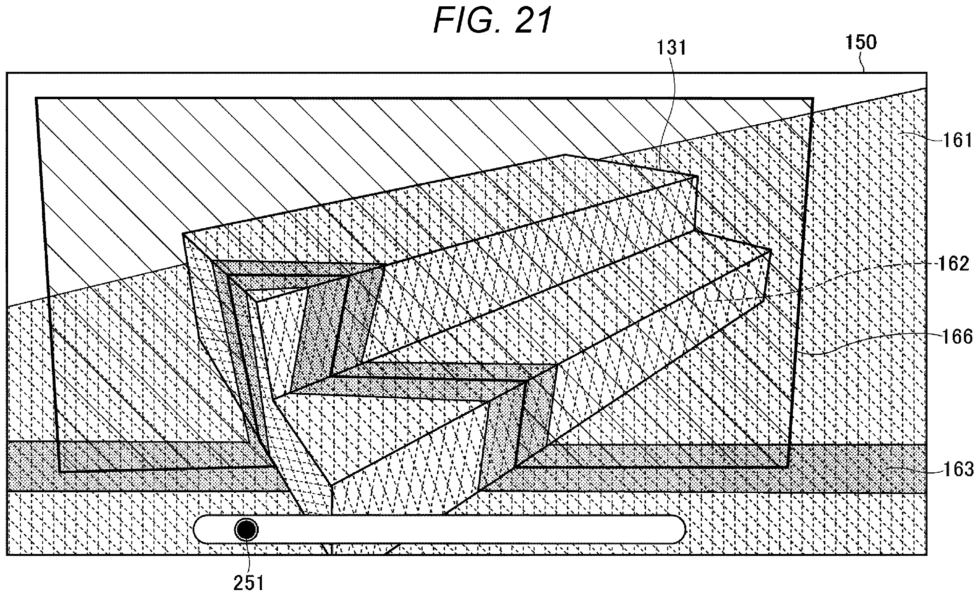

Fig. 21 illustrates a screen example showing the depth-of-field region determined according to the focus position specified by the user.

In a monitor image 150 illustrated in Fig. 21, the three-dimensional mesh 162 of the object 131 generated through the first 3D modeling (real-time 3D modeling) is superimposed on the captured image 161 captured by the image sensor 32. Furthermore, the monitor image 150 shows a focus plane (plane indicating the focus position) 166, the depth-of-field region 163 with the focus plane at its center, and a slider 251 that moves the focus plane 171.

The user can move the focus plane 171 forward and backward by moving the slider 251 or by turning a dial. The imaging control unit 24 can adjust the focal length, the aperture value, and the like so as to achieve the focus plane 171 specified by the user, calculate the depth of field on the basis of the adjusted parameters, and display at least one of the depth-of-field region 163, the front depth-of-field plane 164, or the rear depth-of-field plane 165 superimposed on the captured image 161. Such a display is useful in a case where the user uses manual focus. A user interface that allows the user to adjust the depth-of-field region 163 not only by moving the focus plane 171 forward and backward with the slider 251, but also by moving, for example, the front depth-of-field plane 164 and the rear depth-of-field plane 165 with a slider may be provided, and the imaging control unit 24 may control the camera information such as the focal length and the aperture value according to the depth-of-field region 163 specified by the user.

### <9. Depth Composition Mode>

The imaging device 51 is equipped with a depth composition mode as an operation mode. The depth composition mode is a mode in which imaging at different focus positions is performed a plurality of times, and focused regions (depth-of-field regions) of the plurality of captured images are combined to generate an image (depth-composite image) having a virtually extended depth of field without stopping down the aperture.

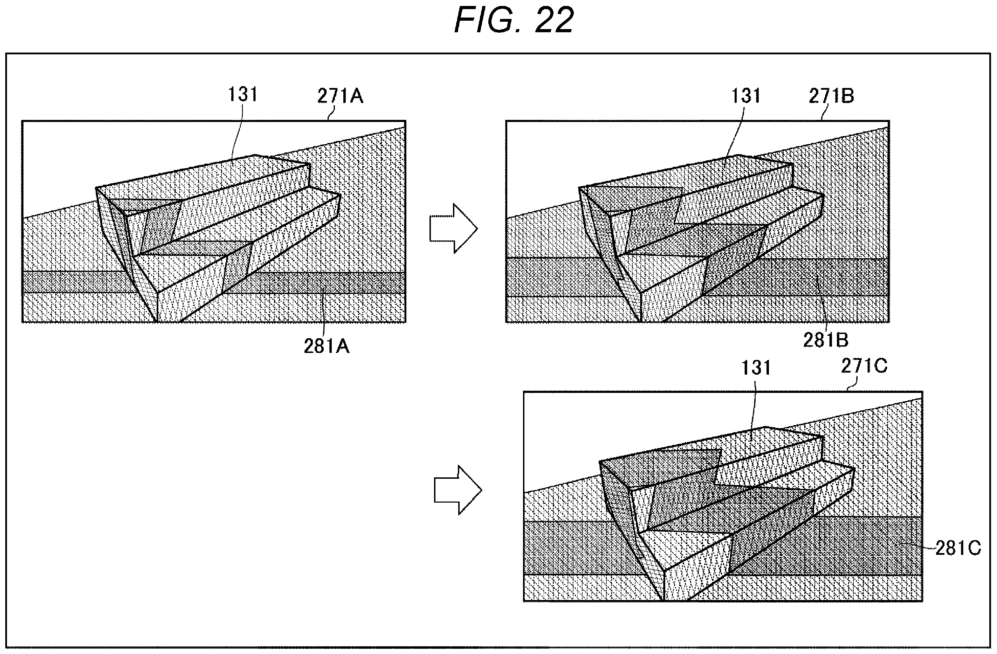

Fig. 22 illustrates an example of a monitor image (display image) displayed on the display 54 in the depth composition mode.

A monitor image 271A is an image after the first imaging in the depth composition mode. In the monitor image 271A, a depth-of-field region 281A in the first imaging is visualized by applying, for example, a color, pattern, or the like.

A monitor image 271B is an image after the second imaging in the depth composition mode. In the monitor image 271B, a depth-of-field region 281B is visualized, the depth-of-field region 281B extending farther than the depth-of-field region 281A in the first imaging. The depth-of-field region 281B includes the first depth-of-field region and the second depth-of-field region.

A monitor image 271C is an image after the third imaging in the depth composition mode. In the monitor image 271C, a depth-of-field region 281C is visualized, the depth-of-field region 281C extending farther than the depth-of-field region 281B in the second imaging. The depth-of-field region 281C includes the first depth-of-field region, the second depth-of-field region, and the third depth-of-field region.

The user can finally generate and record one depth-composite image by moving the focus position such that the depth-of-field region 281 visualized as described above covers the entire image. The imaging device 51 can visualize and present the depth-of-field region, thereby enabling efficient generation of the depth-composite image.

### <10. Depth-of-Field Information Output>

Each example described above corresponds to an example in which, during imaging, the depth-of-field region indicating the depth of field is presented on the display to guide the generation of a more accurate captured image; however, depth-of-field region information indicating the depth-of-field region of the captured image can be output as data together with the captured image. For example, as a file separate from the image data of the captured image, a depth-of-field image in which, for each pixel of the captured image, the depth-of-field region is represented by "1" and a region other than the depth-of-field region is represented by "0" can be output as the depth-of-field information. As metadata of the image data of the captured image, data in which the depth-of-field region is represented by "1" and a region other than the depth-of-field region is represented by "0" may be generated and output. The depth-of-field region information may be generated by the image processing unit 22 or by the imaging control unit 24. The depth-of-field region information may be output from the output unit 30, may be transmitted (output) to the server device 40 via the communication unit 29, or may be stored in (recorded on) the storage unit 23. The captured image that outputs the depth-of-field information may be the image for the first 3D modeling or the image for the second 3D modeling. For example, data of the depth-of-field information is output together with the captured image for the second 3D modeling, and pixels outside the depth-of-field region are masked as invalid pixels when photogrammetry or neural rendering is performed, thereby making it possible to avoid including portions that exhibit substantial blur and are prone to accuracy deterioration when the three-dimensional shape is reconstructed.

### <11. Conclusion>

The imaging device 51 includes the camera information acquisition unit 61 that acquires camera information of a first imaging unit (imaging unit 20) when capturing the image of a subject to be 3D-modeled, the depth-of-field calculation unit 62 that calculates a depth of field using the camera information, and the display control unit 26 that generates a display image (monitor image 150) in which the depth-of-field region 163 visualizing the depth of field is superimposed on the captured image 161 obtained by capturing the image of the subject. This allows the user to perform imaging while checking whether or not a portion intended for imaging is in focus through the depth-of-field region 163 displayed in a superimposed manner. That is, imaging can be performed with an appropriate depth of field. Furthermore, the imaging device 51 includes the depth-of-field rendering unit 63 that generates a depth-of-field image in which the depth-of-field region 163 is superimposed on the three-dimensional shape (three-dimensional mesh 162) of the subject. It is therefore possible to identify the depth of field by recognizing the three-dimensional shape of the subject stereoscopically.

An example in which the first 3D modeling is performed through real-time 3D modeling and the second 3D modeling is performed through photogrammetry or neural rendering has been described, but the present disclosure can be applied to any method for reconstructing (restoring) a three-dimensional shape.

Herein, the steps described in the flowcharts may be executed not only, needless to say, in time series in the described order, but also in parallel or as needed at a timing when a call is made and the like, even if not processed in time series.

Furthermore, herein, a system means a set of a plurality of components (devices, modules (parts), and the like), and it does not matter whether or not all the components are in the same housing. Therefore, a plurality of devices housed in separate housings and connected to each other via a network and one device including a plurality of modules housed in one housing are both systems.

The embodiment of the present disclosure is not limited to the above-described embodiments, and various modifications may be made without departing from the gist of the technology of the present disclosure.

For example, it is possible to adopt an embodiment in which all or some of the above-described embodiments are combined

For example, the technology of the present disclosure can adopt a cloud computing configuration in which a single function is shared and processed by a plurality of devices cooperating with each other via a network. Furthermore, each step described in the flowcharts described above may be performed by a single device or by a plurality of devices in a distributed manner. Moreover, in a case where a single step includes a plurality of processing steps, the plurality of processing steps included in the single step may be performed by a single device or by a plurality of devices in a distributed manner.

Note that, the effects described herein are merely examples and are not restrictive, and there may be effects other than those described herein.

Note that the technology of the present disclosure may adopt the following configurations.
(1) An imaging device including:
   an acquisition unit configured to acquire camera information of a first imaging unit when a subject to be 3D modeling is imaged;
   a calculation unit configured to calculate a depth of field by using the camera information; and
   a display control unit configured to generate a display image in which a depth-of-field region visualizing the depth of field is superimposed on a captured image obtained by imaging the subject.
(2) The imaging device according to the above (1), further including:
   a rendering unit configured to generate a depth-of-field image in which the depth-of-field region is superimposed on a three-dimensional shape of the subject, in which
   the display control unit generates a display image in which the depth-of-field image is superimposed on the captured image.
(3) The imaging device according to the above (1) or (2), in which
   the three-dimensional shape of the subject is generated using a distance to the subject measured by a ranging unit.
(4) The imaging device according to any one of the above (1) to (3), in which
   the captured image on which the depth-of-field region is superimposed includes an image captured by a second imaging unit different from the first imaging unit from which the camera information is acquired.
(5) The imaging device according to any one of the above (1) to (4), in which
   the captured image on which the depth-of-field region is superimposed includes an image captured by the first imaging unit from which the camera information is acquired.
(6) The imaging device according to any one of the above (1) to (5), in which
   the display control unit generates a display image in which the depth-of-field region indicated by a predetermined color or pattern applied to a portion of a three-dimensional shape of the subject that corresponds to the depth of field is superimposed.
(7) The imaging device according to any one of the above (1) to (6), in which
   the display control unit generates a display image in which the depth-of-field region visualizing the depth of field using a front depth-of-field plane and a rear depth-of-field plane is superimposed on the captured image.
(8) The imaging device according to any one of the above (1) to (7), in which
   the display control unit generates a display image in which a focus plane is superimposed on the captured image.
(9) The imaging device according to any one of the above (1) to (8), in which
   the display control unit generates a display image in which a focus plane is superimposed on the captured image, and
   the focus plane is movable according to input by a user.
(10) The imaging device according to any one of the above (1) to (9), further including:
   an operation input unit configured to receive operation input by a user who adjusts the depth-of-field region of the display image; and
   an imaging control unit configured to control the camera information according to the depth-of-field region specified by the user.
(11) The imaging device according to any one of the above (1) to (10), further including:
   an imaging control unit configured to control the camera information on the basis of a three-dimensional shape of the subject to adjust the depth of field.
(12) The imaging device according to any one of the above (1) to (11), further including:
   an imaging control unit configured to determine whether or not a distance to the subject is within the depth of field and cause the first imaging unit to perform imaging in a case where the distance to the subject is within the depth of field.
(13) The imaging device according to the above (12), further including:
   an output unit configured to notify a user that the distance to the subject is outside the depth of field.
(14) The imaging device according to the above (13), in which
   the output unit notifies the user that the distance to the subject is outside the depth of field using an image, sound, or vibration.
(15) The imaging device according to any one of the above (12) to (14), further including:
   an output unit configured to notify a user that imaging has been performed by the first imaging unit.
(16) The imaging device according to any one of the above (1) to (15), in which
   the display control unit has a mode in which a display image obtained by combining the depth-of-field regions obtained through a plurality of imaging operations is generated.
(17) The imaging device according to any one of the above (1) to (16), further including:
   an image processing unit configured to generate depth-of-field information indicating the depth-of-field region.
(18) An imaging method including
   causing an imaging device to perform:
   acquiring camera information of a first imaging unit when an image of a subject is captured;
   calculating a depth of field using the camera information; and
   generating a display image in which a depth-of-field region visualizing the depth of field is superimposed on a captured image obtained by capturing the image of the subject to be 3D-modeled.
(19) A program causing
   a computer to perform processing, the processing including:
   acquiring camera information of a first imaging unit when an image of a subject is captured;
   calculating a depth of field using the camera information; and
   generating a display image in which a depth-of-field region visualizing the depth of field is superimposed on a captured image obtained by capturing the image of the subject to be 3D-modeled.

### REFERENCE SIGNS LIST

- 20: Imaging unit
- 21: Operation unit
- 22: Image processing unit
- 23: Storage unit
- 24: Imaging control unit
- 25: Scoring processing unit
- 26: Display control unit
- 27: Superimposed image generation unit
- 28: Display image generation unit
- 29: Communication unit
- 30: Output unit
- 31: Depth sensor
- 32: Image sensor
- 35: TSDF update unit
- 36: Mesh generation unit
- 40: Server device
- 41: Communication unit
- 42: Photogrammetry processing unit
- 43: Storage unit
- 50: Camera
- 51: Imaging device
- 52: Sensor unit
- 53: Interface device
- 54: Display
- 55: Display
- 56: Viewfinder
- 57: Main body
- 58: Lens barrel
- 61: Camera information acquisition unit
- 62: Depth-of-field calculation unit
- 63: Depth-of-field rendering unit
- 65: Image output unit
- 66: Vibration output unit
- 70: Information processing device
- 71: CPU
- 72: ROM
- 73: RAM
- 74: Non-volatile memory unit
- 75: Input/output interface
- 76: Input unit
- 77: Display unit
- 78: Audio output unit
- 79: Storage unit
- 80: Communication unit
- 81: Drive
- 82: Removable recording medium
- 83: Bus
- 84: Sensor unit
- 85: Image processing unit
- 150: Monitor image
- 161: Captured image
- 162: Three-dimensional mesh
- 163: Depth-of-field region
- 164: Front depth-of-field plane
- 165: Rear depth-of-field plane
- 171: Focus plane
- 172: Front depth of field
- 173: Rear depth of field

## Claims

1. An imaging device comprising:
an acquisition unit configured to acquire camera information of a first imaging unit when an image of a subject to be 3D-modeled is captured;
a calculation unit configured to calculate a depth of field using the camera information; and
a display control unit configured to generate a display image in which a depth-of-field region visualizing the depth of field is superimposed on a captured image obtained by capturing the image of the subject.

2. The imaging device according to claim 1, further comprising:
a rendering unit configured to generate a depth-of-field image in which the depth-of-field region is superimposed on a three-dimensional shape of the subject, wherein
the display control unit generates a display image in which the depth-of-field image is superimposed on the captured image.

3. The imaging device according to claim 2, wherein
the three-dimensional shape of the subject is generated using a distance to the subject measured by a ranging unit.

4. The imaging device according to claim 1, wherein
the captured image on which the depth-of-field region is superimposed includes an image captured by a second imaging unit different from the first imaging unit from which the camera information is acquired.

5. The imaging device according to claim 1, wherein
the captured image on which the depth-of-field region is superimposed includes an image captured by the first imaging unit from which the camera information is acquired.

6. The imaging device according to claim 1, wherein
the display control unit generates a display image in which the depth-of-field region indicated by a predetermined color or pattern applied to a portion of a three-dimensional shape of the subject that corresponds to the depth of field is superimposed.

7. The imaging device according to claim 1, wherein
the display control unit generates a display image in which the depth-of-field region visualizing the depth of field using a front depth-of-field plane and a rear depth-of-field plane is superimposed on the captured image.

8. The imaging device according to claim 1, wherein
the display control unit generates a display image in which a focus plane is superimposed on the captured image.

9. The imaging device according to claim 1, wherein
the display control unit generates a display image in which a focus plane is superimposed on the captured image, and
the focus plane is movable according to input by a user.

10. The imaging device according to claim 1, further comprising:
an operation input unit configured to receive operation input by a user who adjusts the depth-of-field region of the display image; and
an imaging control unit configured to control the camera information according to the depth-of-field region specified by the user.

11. The imaging device according to claim 1, further comprising:
an imaging control unit configured to control the camera information on a basis of a three-dimensional shape of the subject to adjust the depth of field.

12. The imaging device according to claim 1, further comprising:
an imaging control unit configured to determine whether or not a distance to the subject is within the depth of field and cause the first imaging unit to perform imaging in a case where the distance to the subject is within the depth of field.

13. The imaging device according to claim 12, further comprising:
an output unit configured to notify a user that the distance to the subject is outside the depth of field.

14. The imaging device according to claim 13, wherein
the output unit notifies the user that the distance to the subject is outside the depth of field using an image, sound, or vibration.

15. The imaging device according to claim 12, further comprising:
an output unit configured to notify a user that imaging has been performed by the first imaging unit.

16. The imaging device according to claim 1, wherein
the display control unit has a mode in which a display image obtained by combining the depth-of-field regions obtained through a plurality of imaging operations is generated.

17. The imaging device according to claim 1, further comprising:
an image processing unit configured to generate depth-of-field information indicating the depth-of-field region.

18. An imaging method comprising
causing an imaging device to perform:
acquiring camera information of a first imaging unit when an image of a subject is captured;
calculating a depth of field using the camera information; and
generating a display image in which a depth-of-field region visualizing the depth of field is superimposed on a captured image obtained by capturing the image of the subject to be 3D-modeled.

19. A program causing
a computer to perform processing, the processing comprising:
acquiring camera information of a first imaging unit when an image of a subject is captured;
calculating a depth of field using the camera information; and
generating a display image in which a depth-of-field region visualizing the depth of field is superimposed on a captured image obtained by capturing the image of the subject to be 3D-modeled.
